# EUROPEAN PATENT APPLICATION

(11) **EP 4 429 163 A1**
(43) Date of publication of application: **11.09.2024**
(21) Application number: 22939347.5
(22) Date of filing: 29.04.2022
(51) Int. Cl.: H04L 5/14, H04W 72/54, H04W 72/566

(54) **TDD FRAME STRUCTURE CONFIGURATION METHOD AND APPARATUS, AND DEVICE**

(71) Applicant: New H3C Technologies Co., Ltd., Hangzhou, Zhejiang 310052 (CN)
(72) Inventor: KONG, Lei, Beijing 100102 (CN)
(74) Representative: Grünecker Patent- und Rechtsanwälte PartG mbB
(86) International application number: PCT/CN2022/090609
(87) International publication number: WO 2023/206500

(57) **Abstract**

The present invention provides a method, an apparatus and a device for configuring a TDD frame structure. The method includes: determining an operation mode of a BS, where the operation mode is either an FD-enabled mode or an FD-disabled mode, and where each symbol in a slot is allowed to act as an FD symbol, a DL symbol, a UL symbol or an F symbol in the FD-enabled mode, and to act as the DL symbol, the UL symbol or the F symbol in the FD-disabled mode; and transmitting, in the FD-enabled mode, FD mode enable indication information to UE for enabling an FD mode for the UE based on the FD mode enable indication information. In the FD-enabled mode, UL data and DL data are capable of being simultaneously processed on a time-domain resource related to the FD symbol when a plurality of symbols in the slot include the FD symbol. According to the technical solutions of the present invention, it is achieved to process the UL data and the DL data simultaneously and improve resource utilization.

## Description

### TECHNICAL FIELD

The present invention relates to the field of communications and, in particular, to a method, an apparatus and a device for configuring a TDD frame structure.

### BACKGROUND

Time division duplex (TDD) systems are widely applied in mobile communication systems, such as 5G systems. In the TDD systems, a frame structure is divided into downlink (DL) slots, uplink (UL) slots, and special (S) slots. The DL slot includes a plurality of DL symbols, and DL data is processed on time-domain resources related to the DL symbols. The UL slot includes a plurality of UL symbols, and UL data is processed on time-domain resources related to the UL symbols. The S slot includes at least one flexible (F) symbol. The F symbol may be used as DL, which means that the DL data is processed at a time-domain resource related to the F symbol. The F symbol may also be used as UL, which means that the UL data is processed at the time-domain resource related to the F symbol. The F symbol may also be used as a guard period (GP), which means that a UL-DL switching protection is performed at the time-domain resource related to the F symbol.

The TDD systems usually work in a half duplex (HD) mode, in which the same time-domain resource can only be used as either UL or DL at the same time.

### SUMMARY

The present invention provides a method of configuring a time division duplex (TDD) frame structure, which is applicable to a base station (BS) and includes:
determining an operation mode of the BS, where the operation mode is either a full duplex (FD)-enabled mode or an FD-disabled mode, and where each symbol in a slot is allowed to act as an FD symbol, a downlink (DL) symbol, an uplink (UL) symbol or a flexible (F) symbol in the FD-enabled mode, and to act as the DL symbol, the UL symbol or the F symbol in the FD-disabled mode; and
transmitting, in the FD-enabled mode, FD mode enable indication information to user equipment (UE) for enabling an FD mode for the UE based on the FD mode enable indication information;
where in the FD-enabled mode, UL data and DL data are capable of being simultaneously processed on a time-domain resource related to the FD symbol when a plurality of symbols in the slot include the FD symbol.

The present invention provides a method of configuring a TDD frame structure, which is applicable to UE that supports an FD mode and includes: receiving FD mode enable indication information from a BS, where the FD mode enable indication information is transmitted to the UE by the BS in an FD-enabled mode; and
enabling the FD mode for the UE based on the FD mode enable indication information;
where after enabling the FD mode for the UE, each symbol in a slot is expected by the UE to act as an FD symbol, a DL symbol, a UL symbol or an F symbol; and
where after enabling the FD mode for the UE, UL data and DL data are capable of being simultaneously processed on a time-domain resource related to the FD symbol when a plurality of symbols in the slot include the FD symbol.

The present invention provides a method of configuring a TDD frame structure, which is applicable to UE that does not support an FD mode and includes: receiving FD mode enable indication information from a BS, where the FD mode enable indication information is transmitted to the UE by the BS in an FD-enabled mode; and ignoring the FD mode enable indication information; where each symbol in a slot is expected by the UE to act as a DL symbol, a UL symbol or an F symbol; where DL data is processed on a time-domain resource related to the symbol in the slot acting as the DL symbol; and where UL data is processed on the time-domain resource related to the symbol in the slot acting as the UL symbol.

The present invention provides an apparatus for configuring a TDD frame structure, which is applicable to a BS and includes: a determining module, configured to determine an operation mode of the BS, where the operation mode is either an FD-enabled mode or an FD-disabled mode, and where each symbol in a slot is allowed to act as an FD symbol, a DL symbol, a UL symbol or an F symbol in the FD-enabled mode, and to act as the DL symbol, the UL symbol or the F symbol in the FD-disabled mode; a transmitting module, configured to transmit, in the FD-enabled mode, FD mode enable indication information to UE for enabling an FD mode for the UE based on the FD mode enable indication information; and a processing module, configured to be capable of processing UL data and DL data simultaneously on a time-domain resource related to the FD symbol when a plurality of symbols in the slot include the FD symbol in the FD-enabled mode.

The present invention provides an apparatus for configuring a TDD frame structure, which is applicable to UE that supports an FD mode, and which includes: a receiving module, configured to receive FD mode enable indication information from a BS, where the FD mode enable indication information is transmitted to the UE by the BS in an FD-enabled mode; an enabling module, configured to enable the FD mode for the UE based on the FD mode enable indication information, where after enabling the FD mode for the UE, each symbol in a slot is expected by the UE to act as an FD symbol, a DL symbol, a UL symbol or an F symbol; and a processing module, configured to be capable of processing UL data and DL data simultaneously on a time-domain resource related to the FD symbol when a plurality of symbols in the slot include the FD symbol after the FD mode is enabled for the UE.

The present invention provides an apparatus for configuring a TDD frame structure, which is applicable to UE that does not support an FD mode, and which includes: a receiving module, configured to receive FD mode enable indication information from a BS, where the FD mode enable indication information is transmitted to the UE by the BS in an FD-enabled mode; an enabling module, configured to ignore the FD mode enable indication information, where each symbol in a slot is expected by the UE to act as a DL symbol, a UL symbol or an F symbol; and a processing module, configured to process DL data on a time-domain resource related to the symbol in the slot acting as the DL symbol, and process UL data on the time-domain resource related to the symbol in the slot acting as the UL symbol.

The present invention provides an electronic device, which includes: one or more processors and one or more machine-readable storage media, where the one or more machine-readable storage media store machine-executable instructions capable of being executed by the one or more processors, and the one or more processors are configured to execute the machine-executable instructions to implement the methods of configuring a TDD frame structure disclosed in the above examples of the present invention.

According to the above technical solutions, it can be seen that an operation mode of a BS may be classified into an FD-enabled mode and an FD-disabled mode. In the FD-enabled mode, a symbol in a slot is allowed to act as an FD symbol, that is, the function of the symbol is extended to act as the FD symbol, so that UL data and DL data may be simultaneously processed on a time-domain resource related to the FD symbol in the slot acting as the FD symbol. Therefore, the UL data and the DL data can be simultaneously processed on the same time-domain resource, thereby utilizing time-domain resources more effectively, improving resource utilization, increasing a network coverage and a network capacity, and meanwhile reducing a transmission delay, for example, reducing a UL transmission delay.

### BRIEF DESCRIPTION OF THE DRAWINGS

FIG. 1 illustrates a schematic diagram of a frame structure according to an example of the present invention.
FIG. 2 illustrates a schematic flowchart of a method of configuring a TDD frame structure according to an example of the present invention.
FIG. 3 illustrates a schematic flowchart of a method of configuring a TDD frame structure according to an example of the present invention.
FIG. 4 illustrates a schematic flowchart of a method of configuring a TDD frame structure according to an example of the present invention.
FIG. 5 illustrates a schematic diagram of a frame structure according to an example of the present invention.
FIG. 6A and FIG. 6B illustrates schematic diagrams of a frame structure according to an example of the present invention.
FIG. 7 illustrates effective enabled time according to one example of the present invention.
FIG. 8A illustrates a schematic structure diagram of a BS according to one example of the present invention.
FIG. 8B and FIG. 8C illustrate schematic structure diagrams of UE according to an example of the present invention.

### DETAILED DESCRIPTION OF THE EMBODIMENTS

The terms used in examples of the present invention are intended to describe the particular examples only, and not to limit the present invention. The terms determined by "a", "the" and "said" in their singular forms in the present invention and the appended claims are also intended to include their plural forms, unless clearly indicated otherwise in the context. It should also be understood that the term "and/or" as used herein includes any and all possible combinations of one or more of the associated listed items.

It is to be understood that, although terms "first", "second", "third", and the like may be used in the present invention to describe various information, such information should not be limited to these terms. These terms are only used to distinguish information of the same category with each other. For example, without departing from the scope of the present invention, first information may be referred as second information; and similarly, second information may also be referred as first information. In addition, depending on the context, the word "if' as used herein may be interpreted as "when", "upon", or "in response to determining".

In time division duplex (TDD) systems, a frame structure is divided into downlink (DL) slots, uplink (UL) slots, and special (S) slots. The DL slot includes a plurality of DL symbols, and DL data is processed on time-domain resources related to the DL symbols. The UL slot includes a plurality of UL symbols, and UL data is processed on time-domain resources related to the UL symbols. The S slot includes at least one flexible (F) symbol, and the F symbol may be used as DL, as UL, and also as a guard period (GP). At present, the TDD systems work in a half duplex (HD) mode, which means that the same time-domain resource can only be used for either the UL or the DL at the same time.

In order to utilize the time-domain resources more flexibly and to improve resource utilization, it is expected for the TDD systems to configure the same time-domain resource for both the UL and the DL at the same time. That is, both the UL data and the DL data are simultaneously processed on the same time-domain resource, i.e., a full duplex (FD) mode.

For the TDD systems, once the frame structure is determined, user equipment (UE) can transmit and receive data in accordance with the frame structure. The frame structure is divided into the DL slots, the UL slots and the S slots. In the FD mode, the frame structure may be obtained by a base station (BS) and the UE. The BS schedules the UE adopting the HD mode for either transmissions or receptions in accordance with the frame structure. The BS schedules the UE adopting the FD mode for transmissions, receptions, or simultaneous transmissions and receptions in accordance with the frame structure.

As described above, the BS may configure the frame structure for the FD mode and inform the UE about the frame structure for the FD mode, so that the UE may learn the current frame structure, thereby transmitting and receiving the data correctly. From another point of view, after learning the frame structure for the FD mode, the UE may also learn that there may be a current interference between UE, so as to take some interference cancellation techniques to mitigate the interference caused by other UE, thereby improving a communication reliability.

According to one example of the present invention, a method of configuring a TDD frame structure is provided to support the FD mode in the TDD systems. The frame structure configured for the FD mode indicates UL resources, DL resources, and FD resources. Such a frame structure includes DL slots, UL slots, FD slots and S slots. The DL slot includes a plurality of DL symbols, and DL data is processed on time-domain resources related to the DL symbols. The UL slot includes a plurality of UL symbols, and UL data is processed on time-domain resources related to the UL symbols. The FD slot includes a plurality of FD symbols that are used for the UL data and DL data, and the UL data and the DL data may be simultaneously processed on time-domain resources related to the FD symbols. The S slot includes at least one F symbol, and the F symbol may be used as DL, as UL, and as a GP. When the F symbol is used as the DL, it means that the F symbol is used for the DL data and the DL data is processed on the F symbol. When the F symbol is used as the UL, it means that the F symbol is used for the UL data and the UL data is processed on the F symbol. When being used as the GP, the F symbol acts as protection time for a UL/DL switching.

The FD symbol in this example refers to a symbol on which a DL data transmission and a UL data transmission may be performed simultaneously.

Based on the above frame structure for the FD mode, a BS may configure the frame structure with fixed FD symbols to UE. In other words, the frame structure includes the fixed FD symbols (i.e., the FD symbols are directly configured in the frame structure), that is, the FD symbols are extended on the basis of the UL symbols, the DL symbols and the F symbols. With the FD symbols, the BS and the UE process the UL data and the DL data simultaneously.

The following solutions are described first.

Now, in a 5G system, TDD frame structure is divided into UL slots, DL slots, and S slots. One or more F symbols, which are included in n S slot, may be used as UL, DL or a GP. The frame structure may be informed to UE through a UL-DL common configuration (TDD-UL-DL-ConfigCommon) or a UL-DL dedicated configuration (TDD-UL-DL-ConfigDedicated).

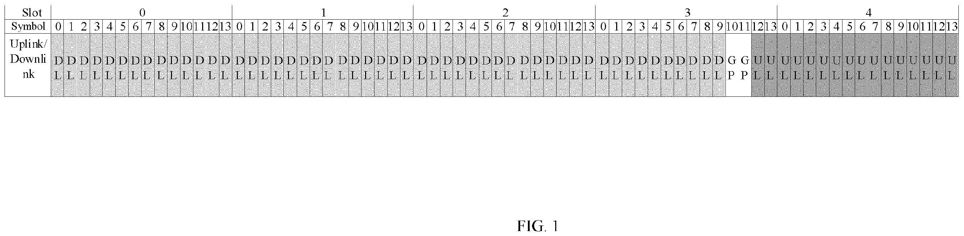

Regarding the TDD-UL-DL-ConfigCommon, there may be up to two frame structure patterns to be configured. In each pattern, it may configure a period of the frame structure, and give the specific configures of each slot and each symbol (a DL symbol, a UL symbol, or an F symbol) in the period, so as to determine the frame structure. One example of the frame structure may be illustrated in FIG. 1, in which a UL/DL ratio is 1:4, Slot 3 is the S slot, and Symbols #10 and #11 are configured as the F symbols for the GP of a UL/DL switching.

Regarding the TDD-UL-DL-ConfigDedicated, the symbols that are configured as the F symbols through the TDD-UL-DL-ConfigCommon may be changed and configured as the DL symbols or the UL symbols.

The technical solution of one example of the present invention is described below.

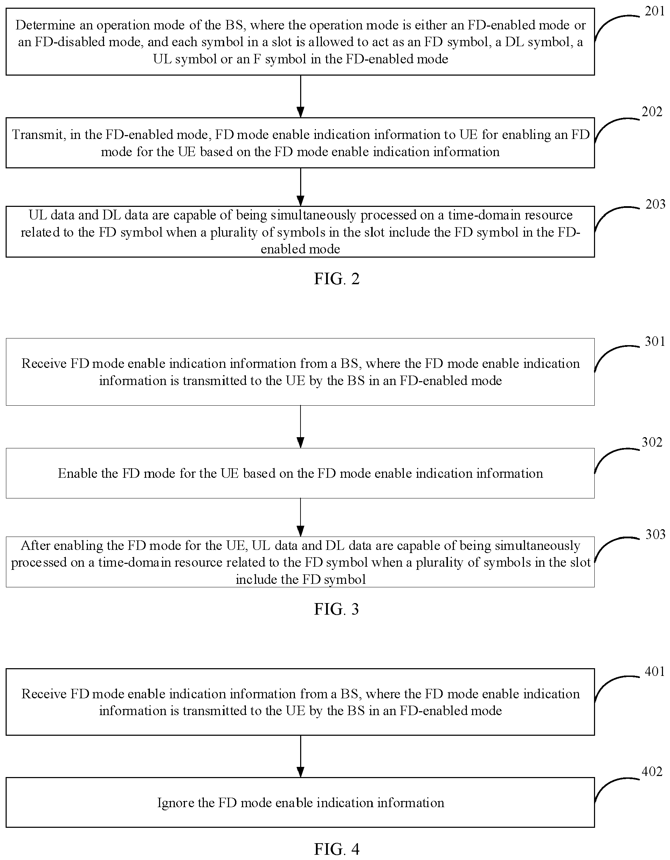

A method of configuring a TDD frame structure provided in this example may be applied to a BS. As illustrated in FIG. 2 that is a schematic flowchart of the method of configuring a TDD frame structure, the method may include the following steps.

At step 201, an operation mode of the BS is determined. The operation mode may be either an FD-enabled mode or an FD-disabled mode. Each symbol in a slot is allowed to act as an FD symbol, a DL symbol, a UL symbol or an F symbol in the FD-enabled mode, and to act as the DL symbol, the UL symbol or the F symbol in the FD-disabled mode.

At step 202, in the FD-enabled mode, FD mode enable indication information is transmitted to UE for enabling an FD mode for the UE based on the FD mode enable indication information.

At step 203, in the FD-enabled mode, UL data and DL data are capable of being simultaneously processed on a time-domain resource related to the FD symbol when a plurality of symbols in the slot include the FD symbol.

In one example, the F symbol in the slot is allowed to be used as DL, UL or a GP in the FD-enabled mode, and to be used as the DL, the UL or the GP in the FD-disabled mode.

In one example, transmitting the FD mode enable indication information to the UE may include: transmitting a UL-DL common configuration message carrying the FD mode enable indication information to the UE. The UL-DL common configuration message carrying the FD mode enable indication information may include that: the UL-DL common configuration message carries the FD mode enable indication information if the UL-DL common configuration message includes an FD pattern field. Alternatively, the UL-DL common configuration message does not carry the FD mode enable indication information if the UL-DL common configuration message does not include the FD pattern field.

In one example, when carrying the FD mode enable indication information, the UL-DL common configuration message may be transmitted via a system information block (SIB) message (e.g., an SIB1 message) or via a radio resource control (RRC) reconfiguration message.

When the UL-DL common configuration message carrying the FD mode enable indication information is transmitted via the SIB message, effective time of enabling the FD mode includes, but is not limited to: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted. Alternatively, when the UL-DL common configuration message carrying the FD mode enable indication information is transmitted via the RRC reconfiguration message, the effective time of enabling the FD mode include, but is not limited to: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

In one example, before step 203, the BS may also determine a target frame structure, where the target frame structure may include a plurality of slots and each of the slots may include a plurality of symbols, and the BS transmits the UL-DL common configuration message to the UE, where the UL-DL common configuration message includes frame structure parameters corresponding to the target frame structure, so that the UE determines the target frame structure based on the frame structure parameters. The frame structure parameters may include FD pattern parameters corresponding to one or more FD symbols when the symbols in the plurality of slots corresponding to the target frame structure include the one or more FD symbols. On the basis of the above, a data processing may be performed based on the target frame structure. With respect to step 203, during performing the data processing based on the target frame structure, the UL data and the DL data are capable of being simultaneously processed on the time-domain resource related to the symbol in the slot acting as the FD symbol, the DL data is processed on the time-domain resource related to the symbol in the slot acting as the DL symbol, and the UL data is processed on the time-domain resource related to the symbol in the slot acting as the UL symbol.

In one example, a plurality of FD symbols, when included in the symbols in the slots corresponding to the target frame structure, are consecutive. For example, K1 consecutive FD symbols are configured backward from the first symbol in a target period of the target frame structure, and/or, K2 consecutive FD symbols are configured forward from the last symbol in the target period of the target frame structure, where the K1 is a positive integer and the K2 is a positive integer.

In one example, the FD pattern parameters include the first FD symbol quantity and the second FD symbol quantity. Further, the first FD symbol quantity indicates the value of the K1 if the K1 consecutive FD symbols are configured in the target frame structure; and/or, the second FD symbol quantity indicates the value of the K2 if the K2 consecutive FD symbols are configured in the target frame structure.

In one example, the FD pattern parameters include the first FD slot quantity and the third FD symbol quantity, and the second FD slot quantity and the fourth FD symbol quantity. The first FD slot quantity indicates the number of complete slots occupied by the K1 FD symbols and the third FD symbol quantity indicates the number of FD symbols in an incomplete slot occupied by the K1 FD symbols if the K1 consecutive FD symbols are configured in the target frame structure; and/or, the second FD slot quantity indicates the number of complete slots occupied by the K2 FD symbols and the fourth FD symbol quantity indicates the number of FD symbols in an incomplete slot occupied by the K2 FD symbols if the K2 consecutive FD symbols are configured in the target frame structure.

In one example, in the case where the symbols in the plurality of slots corresponding to the target frame structure include one or more F symbols, a UL-DL dedicated configuration message may be transmitted to the UE after the UL-DL common configuration message is transmitted to the UE. The UL-DL dedicated configuration message includes an FD parameter indicating that the one or more F symbols are used as the FD.

A method of configuring a TDD frame structure is provided in one example of the present invention and may be applied to UE that supports an FD mode. As illustrated in FIG. 3 that is a schematic flowchart of the method of configuring a TDD frame structure, the method may include the following steps.

At step 301, FD mode enable indication information is received from a BS. The FD mode enable indication information is transmitted to the UE by the BS in an FD-enabled mode.

At step 302, the FD mode is enabled for the UE based on the FD mode enable indication information.

After the FD mode is enabled for the UE, each symbol in a slot is expected by the UE to act as an FD symbol, a DL symbol, a UL symbol or an F symbol. If the FD mode is not enabled for the UE, each symbol in the slot is expected by the UE to act as the DL symbol, the UL symbol or the F symbol.

The F symbol in the slot is expected by the UE to be used as DL, UL or a GP in the event of enabling the FD mode for the UE, and to be used as the DL, the UL or the GP in the event of not enabling the FD mode for the UE.

At step 303, after enabling the FD mode for the UE, UL data and DL data are capable of being simultaneously processed on a time-domain resource related to the FD symbol when a plurality of symbols in the slot include the FD symbol, the DL data is processed on a time-domain resource related to the DL symbol when the plurality of symbols in the slot include the DL symbol, and the UL data is processed on a time-domain resource related to the UL symbol when the plurality of symbols in the slot include the UL symbol.

If the FD mode is not enabled for the UE, the DL data is processed on the time-domain resource related to the DL symbol when the plurality of symbols in the slot include the DL symbol, and the UL data is processed on the time-domain resource related to the UL symbol when the plurality of symbols in the slot include the UL symbol.

Whether the FD mode is enabled for the UE or not, the DL data is processed on a time-domain resource related to the F symbol used as the DL, and the UL data is processed on the time-domain resource related to the F symbol used as the UL.

In one example, receiving the FD mode enable indication information from the BS may include: receiving a UL-DL common configuration message carrying the FD mode enable indication information from the BS. The UL-DL common configuration message carrying the FD mode enable indication information may include that: the UL-DL common configuration message carries the FD mode enable indication information if the UL-DL common configuration message includes an FD pattern field. Alternatively, the UL-DL common configuration message does not carry the FD mode enable indication information if the UL-DL common configuration message does not include the FD pattern field.

In one example, when carrying the FD mode enable indication information, the UL-DL common configuration message may be received via an SIB message (e.g., an SIB 1 message) or via an RRC reconfiguration message.

When the UL-DL common configuration message carrying the FD mode enable indication information is received via the SIB message, effective time of the UE enabling the FD mode may include, but is not limited to: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

When the UL-DL common configuration message carrying the FD mode enable indication information is received via the RRC reconfiguration message, the effective time of the UE enabling the FD mode may include, but is not limited to: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

Before step 303 in one example, it may receive the UL-DL common configuration message from the BS, where the UL-DL common configuration message includes frame structure parameters corresponding to a target frame structure. It also may determine the target frame structure based on the frame structure parameters. The target frame structure includes a plurality of slots, and each of the slots includes a plurality of symbols. When the symbols in the plurality of slots corresponding to the target frame structure include one or more F symbols, the frame structure parameters include FD pattern parameters corresponding to the one or more FD symbols. The FD pattern parameters indicate the one or more FD symbols in the plurality of slots corresponding to the target frame structure, which means that the UE may determine the one or more FD symbols in the plurality of slots corresponding to the target frame structure based on the FD pattern parameters. It also may perform a data processing based on the target frame structure.

With respect to step 303, in the case that the data processing is performed based on the target frame structure, the UL data and the DL data are capable of being simultaneously processed on the time-domain resource related to the symbol in the slot acting as the FD symbol, the DL data is processed on the time-domain resource related to the symbol in the slot acting as the DL symbol, and the UL data is processed on the time-domain resource related to the symbol in the slot acting as the UL symbol.

In one example, a plurality of FD symbols, when included in the symbols in the slots corresponding to the target frame structure, are expected to be consecutive. For example, K1 consecutive FD symbols are expected to be configured backward from the first symbol in a target period of the target frame structure, and/or, K2 consecutive FD symbols are expected to be configured forward from the last symbol in the target period of the target frame structure, where the K1 is a positive integer and the K2 is a positive integer.

The FD pattern parameters include the first FD symbol quantity and the second FD symbol quantity. The value of the K1 is determined based on the first FD symbol quantity if the target frame structure includes the K1 consecutive FD symbols, and the FD symbols are determined in the plurality of slots corresponding to the target frame structure based on the value of the K1. The value of the K2 is determined based on the second FD symbol quantity if the target frame structure includes the K2 consecutive FD symbols, and the FD symbols are determined in the plurality of slots corresponding to the target frame structure based on the value of the K2.

The FD pattern parameters include the first FD slot quantity and the third FD symbol quantity, and the second FD slot quantity and the fourth FD symbol quantity. If the target frame structure includes the K1 consecutive FD symbols, the number of complete slots occupied by the K1 FD symbols is determined based on the first FD slot quantity and the number of FD symbols in an incomplete slot occupied by the K1 FD symbols is determined based on the third FD symbol quantity, and the FD symbols are determined in the plurality of slots corresponding to the target frame structure based on the first FD slot quantity and the third FD symbol quantity. If the target frame structure includes the K2 consecutive FD symbols, the number of complete slots occupied by the K2 FD symbols is determined based on the second FD slot quantity and the number of FD symbols in an incomplete slot occupied by the K2 FD symbols is determined based on the fourth FD symbol quantity, and the FD symbols are determined in the plurality of slots corresponding to the target frame structure based on the second FD slot quantity and the fourth FD symbol quantity.

In one example, the symbols in the plurality of slots corresponding to the target frame structure include one or more F symbols. After receiving the UL-DL common configuration message from the BS, a UL-DL dedicated configuration message may further be received from the BS, where the UL-DL dedicated configuration message includes an FD parameter indicating that the one or more F symbols are used as FD.

A method of configuring a TDD frame structure is provided in one example of the present invention and may be applied to UE that does not support an FD mode. As illustrated in FIG. 4 that is a schematic flowchart of the method of configuring a TDD frame structure, the method may include the following steps.

At step 401, FD mode enable indication information is received from a BS. The FD mode enable indication information is transmitted to the UE by the BS in an FD-enabled mode.

At step 402, the FD mode enable indication information is ignored. That is, it does not enable the FD mode for the UE based on the FD mode enable indication information. Each symbol in a slot is expected by the UE to act as a DL symbol, a UL symbol or an F symbol. DL data is processed on a time-domain resource related to the symbol in the slot acting as the DL symbol, and UL data is processed on a time-domain resource related to the symbol in the slot acting as the UL symbol. The F symbol in the slot is expected by the UE to be used as DL, UL or a GP. The DL data is processed on a time-domain resource related to the F symbol in the slot used as the DL, and the UL data is processed on the time-domain resource related to the F symbol in the slot used as the UL.

According to the above technical solutions, it can be seen that an operation mode of the BS may be classified into an FD-enabled mode and an FD-disabled mode. In the FD-enabled mode, each symbol in a slot is allowed to act as an FD symbol, that is, the function of the symbol in the slot is extended to act as the FD symbol, and in this case, the BS and the UE may process the UL data and the DL data simultaneously on a time-domain resource related to the symbol in the slot acting as the FD symbol. Therefore, the UL data and the DL data can be simultaneously processed on the same time-domain resource, thereby utilizing time-domain resources more effectively, improving resource utilization, increasing a network coverage and a network capacity, as well as reducing a transmission delay, for example, reducing a UL transmission delay.

The above technical solutions are described in conjunction with specific examples below.

One example of the present invention provides a method of configuring a TDD frame structure, which makes the frame structure applicable to an FD mode. One or more FD symbols are clearly indicated in the frame structure, for example, one or more fixed FD symbols are configured through a UL-DL common configuration (TDD-UL-DL-ConfigCommon) and/or a UL-DL dedicated configuration (TDD-UL-DL-ConfigDedicated). The frame structure for the FD mode may include a plurality of slots, each of the slots may include a plurality of symbols, and these symbols may include F symbols, DL symbols, UL symbols and FD symbols. A BS and UE process DL data on time-domain resources related to the DL symbols and process UL data on time-domain resources related to the UL symbols. The BS enabled with an FD mode may process the UL data and the DL data simultaneously on the time-domain resources related to the FD symbols, while the UE enabled with the FD mode may process the UL data and the DL data simultaneously on the time-domain resources related to the FD symbols.

With respect to the F symbol, it is used as DL, UL or a GP. The BS and the UE may process the DL data on the F symbol used as the DL and process the UL data on the F symbol used as the UL, and the F symbol used as the GP may be used for a UL-DL switching protection.

The reason why the F symbol is used as the GP is to achieve the UL-DL switching protection in the frame structure of a TDD system through the GP symbol. However, since separate antennas and RF circuits are used for transmissions and receptions when the BS operates in the FD mode, it is unnecessary for the BS to use the GP symbol to achieve the UL-DL switching protection. The UE in the FD mode operates similarly as the BS, and thus it is also unnecessary to achieve the UL-DL switching protection through the GP symbol. The UE in an HD mode takes sufficient time for a switching between transmitting RF and receiving RF, that is, the GP symbol is used to achieve the UL-DL switching protection. In view of the above, in order to support the UE in the HD mode, the GP symbol is still supported in the frame structure for the FD mode. Therefore, the F symbol is allowed to be used as the GP.

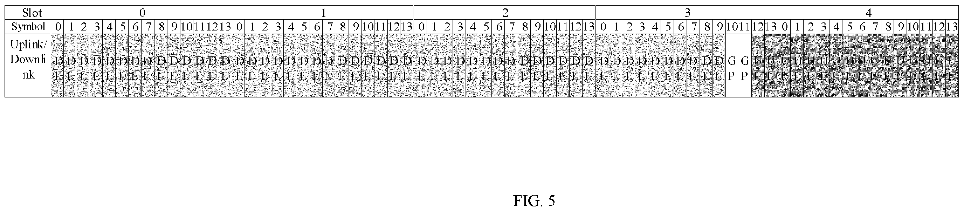

In order to make different types of UE compatible, the frame structure for the FD mode is designed to allocate the GP to the UE (e.g., the UE in the HD mode) for the UL-DL switching protection. As illustrated in FIG. 5 that is a schematic diagram of the frame structure, Symbol #7 - Symbol #13 in Slot 2 are configured as the FD symbols (i.e., DL symbols are changed to FD symbols). Since the UL data and the DL data are simultaneously processed on the FD symbol, at least Symbol #6 is used as the GP. On the contrary, if the BS transmits the DL data, i.e., the UE receives the DL data, on the positions at which the FD symbols have been configured, it also leaves the GP behind the FD symbols for the UE to facilitate the UL-DL switching protection. For example, Symbol #0 - Symbol #7 in Slot 4 are configured as the FD symbols (i.e., UL symbols are changed to FD symbols) and the DL data is transmitted on these FD symbols. In this case, when the UL data is received on Symbol #8 - Symbol #13 (the UL data may be received when Symbol #8 - Symbol #13 act as either the UL symbols or the FD symbols), at least Symbol #8 is left as the GP resource for the UE to achieve the UL-DL switching protection.

With respect to the FD symbol in one example, a part of frequency-domain resources of the FD symbol may be used as the UL, another part of the frequency-domain resources may be used as the DL, and a middle part of the frequency-domain resources may be acted as a gap for a protection between the UL and the DL, so as to prevent from generating an inter sub-band interference.

In one example, the method of configuring a TDD frame structure may include the following steps.

At step S 11, the BS determines its operation mode, either an FD-enabled mode or an FD-disabled mode. For example, the operation mode may be configured for the BS according to service requirements, whose procedure is not limited by the present invention. When the BS is in the FD-enabled mode, each symbol in a slot is allowed to act as the FD symbol, the F symbol, the DL symbol or the UL symbol, and the F symbol in the slot is allowed to be used as the DL, the UL or the GP. When the BS is in the FD-disabled mode, each symbol in the slot is allowed to act as the F symbol, the DL symbol or the UL symbol, which means that the symbol in the slot is not allowed to be the FD symbol, and the F symbol in the slot is allowed to be used as the DL, the UL and the GP.

At step S 12, the BS determines a target frame structure. The target frame structure may include a plurality of slots, each slot may include a plurality of symbols, and the symbol may be the FD symbol, the F symbol, the DL symbol or the UL symbol.

The target frame structure is used for implementing a data processing (e.g., a data transmission and/or a data reception). The BS determines the target frame structure and implements the data processing based on the target frame structure. The UE also determines the target frame structure and implements the data processing based on the target frame structure. In addition, the target frame structure determined by the BS is the same as the target frame structure determined by the UE.

In one example, the symbols in the slots corresponding to the target frame structure may include one FD symbol or include a plurality of FD symbols. The plurality of FD symbols, when included in the symbols in the slots corresponding to the target frame structure, may be consecutive. The number of the GP symbols may be lowered when the plurality of FD symbols are consecutive. Of course, the plurality of FD symbols may be not consecutive, that is, one or more symbols of another type occur among the plurality of FD symbols.

In one example, K1 consecutive FD symbols are configured backward from the first symbol in a target period of the target frame structure, where the K1 is a positive integer. The target period may be any period of the target frame structure. The K1 consecutive FD symbols may occupy only one slot, or may occupy a plurality of slots. For example, when the first slot in the target period of the target frame structure is a DL slot, the K1 consecutive FD symbols may be configured backward from the first DL slot in the target period of the target frame structure. When the first slot in the target period of the target frame structure is an S slot, the K1 consecutive FD symbols may be configured backward from the first S slot in the target period of the target frame structure.

In one example, K2 consecutive FD symbols are configured forward from the last symbol in the target period of the target frame structure, where the K2 is a positive integer. The target period may be any period of the target frame structure. The K2 consecutive FD symbols may occupy only one slot, or may occupy a plurality of slots. For example, when the last slot in the target period of the target frame structure is a UL slot, the K2 consecutive FD symbols may be configured forward from the last UL slot in the target period of the target frame structure. When the last slot in the target period of the target frame structure is an S slot, the K2 consecutive FD symbols may be configured forward from the last S slot in the target period of the target frame structure.

In one example, K1 consecutive FD symbols may be configured backward from the first symbol in the target period of the target frame structure, with the K1 being a positive integer, and K2 consecutive FD symbols may be configured forward from the last symbol in the target period of the target frame structure, with the K2 being a positive integer.

As an example, in case of one group of consecutive FD symbols, a plurality of (e.g., K1, which indicates the number of the consecutive symbols starting from the first symbol) consecutive FD symbols are configured backward from the first symbol in the target period of the target frame structure, or a plurality of (e.g., K2, which indicates the number of the consecutive symbols starting from the last symbol) consecutive FD symbols are configured forward from the last symbol in the target period of the target frame structure.

As another example, in case of two groups of consecutive FD symbols, a plurality of (e.g., K1, which only means the number of the consecutive symbols, rather than means that the number configured in the one group is the same as the number configured in the two groups) consecutive FD symbols are configured backward from the first symbol in the target period of the target frame structure, and a plurality of (e.g., K2) consecutive FD symbols are configured forward from the last symbol in the target period of the target frame structure.

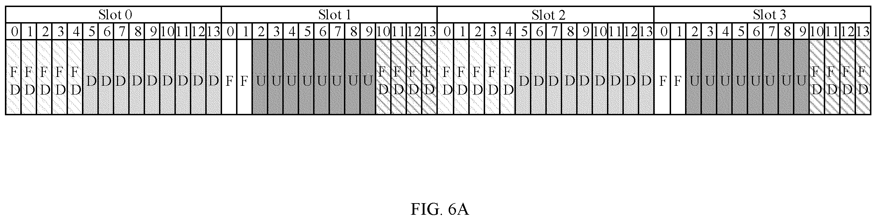

As illustrated in FIG. 6A that is a schematic diagram of a time-domain resource configuration. FIG. 6A provides an example of configuring the FD symbols in the DL symbols and the UL symbols. For example, the period of the target frame structure is 1ms, i.e., two slots. The section filed with shadow (e.g., Symbols #10-#13 in Slot 1/Slot 3, and Symbols #0-#4 in Slot 0/Slot 2) means the configured FD symbols. It can be seen from FIG. 6A, the consecutive FD symbols may be configured backward from the first symbol (e.g., the first symbol in Slot 0, and the first symbol in Slot 2) in the target period (in which Slot 0 and Slot 1 constitute one target period, and Slot 2 and Slot 3 constitute one target period) of the target frame structure, for example, 5 consecutive FD symbols are configured backward. In addition, the consecutive FD symbols may be configured forward from the last symbol (e.g., the last symbol in Slot 1, and the last symbol in Slot 3) in the target period of the target frame structure, for example, 4 consecutive FD symbols are configured forward.

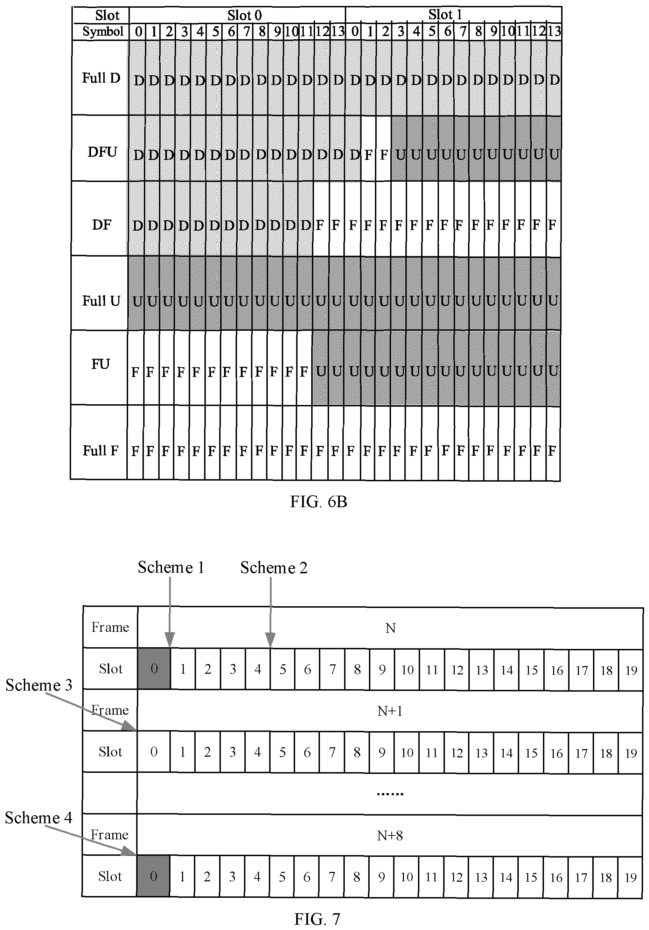

In view of the above, a maximum of two groups of consecutive FD resources may be configured in the target frame structure. For example, when two groups of consecutive FD resources are configured in the target frame structure, the first group of FD resources are configured backward from the first symbol in the target period of the target frame structure, and the second group of FD resources are configured forward from the last symbol in the target period of the target frame structure. When one group of consecutive FD resources are configured in the target frame structure, the FD resources are configured backward from the first symbol in the target period of the target frame structure, or the FD resources are configured forward from the last symbol in the target period of the target frame structure. In the case where the target period of the target frame structure includes two slots, for example, the consecutive FD symbols may be configured in the two slots. As illustrated in FIG. 6B, it is the example that two slots constitute the target period.

At step S13, the BS transmits a UL-DL common configuration message to the UE.

In one example, when the operation mode of the BS is the FD-enabled mode, the UL-DL common configuration message may carry the FD mode enable indication information. For example, the UL-DL common configuration message carries the FD mode enable indication information if the UL-DL common configuration message includes an FD pattern field.

Alternatively, when the operation mode of the BS is the FD-disabled mode, the UL-DL common configuration message may not carry the FD mode enable indication information. For example, the UL-DL common configuration message does not carry the FD mode enable indication information if the UL-DL common configuration message does not include the FD pattern field.

The UL-DL common configuration message may be TDD-UL-DL-ConfigCommon. The extra FD pattern field may be introduced in the UL-DL common configuration message and indicates the FD mode enable indication information. The FD pattern field may be fullDuplexPattern.

The UL-DL common configuration message may be transmitted via an SIB message (e.g., an SIB1 message) or via an RRC reconfiguration message.

When the UL-DL common configuration message carrying the FD mode enable indication information is transmitted via the SIB message, it may clarify effective time of the FD mode. For example, the effective time of enabling the FD mode may be determined in the following schemes.

Scheme 1: a slot next to a slot at which the SIB message is transmitted, i.e., the slot next to the transmission slot of the SIB message. That is, it becomes effective to enable the FD mode at the slot next to the slot at which the SIB message is transmitted. As illustrated in FIG. 7, the SIB message is transmitted every 8 frames, i.e., once every 80ms. By referring to FIG. 7, the SIB message is transmitted at Slot 0 of the N-th frame and the (N+8)-th frame. Obviously, the slot at which the SIB message is transmitted is Slot 0 of the N-th frame and the (N+8)-th frame. Therefore, the FD mode becomes effective at Slot 1 of the N-th frame.

Scheme 2: the M-th slot after the slot at which the SIB message is transmitted, i.e., the M-th slot after the transmission slot of the SIB message. That is, it becomes effective to enable the FD mode at the M-th slot after the slot at which the SIB message is transmitted. The M may be a fixed value agreed between the BS and the UE and may be a positive integer, which is not limited by the present invention. For example, the M is the fixed value agreed between the BS and the UE based on a capability of the UE, such as 4, 5, 6, 7, etc., instead of informing the UE of the value of the M by the BS through specific signaling.

As illustrated in FIG. 7, M=5 is taken as an example. Since the slot at which the SIB message is transmitted is Slot 0 of the N-th frame, the FD mode becomes effective at Slot 5 of the N-th frame(the fifth slot after Slot 0).

Scheme 3: the first slot of a frame next to a frame in which the SIB message is transmitted, i.e., the first slot of the first frame after the transmission frame of the SIB message. That is, it becomes effective to enable the FD mode at the first slot of the frame next to the frame in which the SIB message is transmitted. As illustrated in FIG. 7, the slot at which the SIB message is transmitted is Slot 0 of the N-th frame, and therefore, the FD mode becomes effective at Slot 0 of the (N+1)-th frame.

Scheme 4: the first slot of a period next to a period in which the SIB message is transmitted, i.e., the first slot of the first period after the transmission period of the SIB message. That is, it becomes effective to enable the FD mode at the first slot of the period next to the period in which the SIB message is transmitted. As illustrated in FIG. 7, the slot at which the SIB message is transmitted is Slot 0 of the N-th frame. Therefore, the period next to the current period is the (N+8)-th frame, and the FD mode becomes effective at Slot 0 of the (N+8)-th frame.

When the UL-DL common configuration message carrying the FD mode enable indication information is carried via the RRC reconfiguration message, it may clarify the effective time of the FD mode. For example, the effective time of enabling the FD mode may be determined in the following schemes. Scheme 1: a slot next to a slot at which an RRC reconfiguration completion message corresponding to the RRC reconfiguration message is received. That is, it becomes effective to enable the FD mode at the slot next to the slot at which the RRC reconfiguration completion message is received. Scheme 2: the M-th slot after the slot at which the RRC reconfiguration completion message corresponding to the RRC reconfiguration message is received. That is, it becomes effective to enable the FD mode at the M-th slot after the slot at which the RRC reconfiguration completion message is received. The M may be a fixed value agreed between the BS and the UE and may be a positive integer, which is not limited by the present invention.

When the BS transmits the UL-DL common configuration message carrying the FD mode enable indication information via the RRC reconfiguration message, the UE may transmit the RRC reconfiguration completion message to the BS after receiving the RRC reconfiguration message. The BS may receive the RRC reconfiguration completion message corresponding to the RRC reconfiguration message, and take the slot at which the RRC reconfiguration completion message corresponding to the RRC reconfiguration message is received as a reference basis.

In one example, the UL-DL common configuration message may carry frame structure parameters corresponding to the target frame structure. The frame structure parameters indicate the target frame structure and are not limited by the present invention, as long as the UE can determine the target frame structure based on the frame structure parameters.

When the symbols in the plurality of slots corresponding to the target frame structure include one or more FD symbols, the frame structure parameters may include FD pattern parameters corresponding to the one or more FD symbols. The FD pattern parameters indicate the one or more FD symbols in the plurality of slots corresponding to the target frame structure, so that the UE determines the one or more FD symbols in the slots.

Considering the different granularities of time-domain configurations, the FD pattern parameters corresponding to the one or more FD symbols may be presented in a symbol granularity or in a slot plus symbol granularity.

Case 1: the FD pattern parameters corresponding to the one or more FD symbols are presented in the symbol granularity.

On the basis of TDD-UL-DL-ConfigCommon, the FD pattern parameters corresponding to one or more FD symbols are introduced in the UL-DL common configuration message and include two main parameters:

*nrofFullDuplexSymbolsOutofDlSymbols*: this parameter indicates the first FD symbol quantity. If K1 consecutive FD symbols are configured in the target frame structure, this parameter indicates the value of the K1, that is, this parameter shows the number of the consecutive FD symbols backward from the first symbol in the target period of the frame structure. The value of this parameter is of a positive integer type, from 0 to the maximum number of symbols in a 10ms period. This parameter may be expressed as *maxNrofSlots*maxNrofSymbols*, where the *maxNrofSlots* represents the maximum number of slots in the 10ms period, and the *maxNrofSymbols* represents the number of symbols in a single slot. This parameter is optional.

*nrofFullDuplexSymbolsOutofUlSymbols*: this parameter indicates the second FD symbol quantity. If K2 consecutive FD symbols are configured in the target frame structure, this parameter indicates the value of the K2, that is, this parameter shows the number of the consecutive FD symbols forward from the last symbol in the target period of the frame structure. The value of this parameter is of a positive integer type, from 0 to the maximum number of symbols in the 10ms period. This parameter may be expressed as *maxNrofSlots*maxNrofSymbols*, where the *maxNrofSlots* represents the maximum number of slots in the 10ms period, and the *maxNrofSymbols* represents the number of symbols in a single slot. This parameter is optional.

For the above Case 1, the pseudocode of the UL-DL common configuration message may be shown as follows:

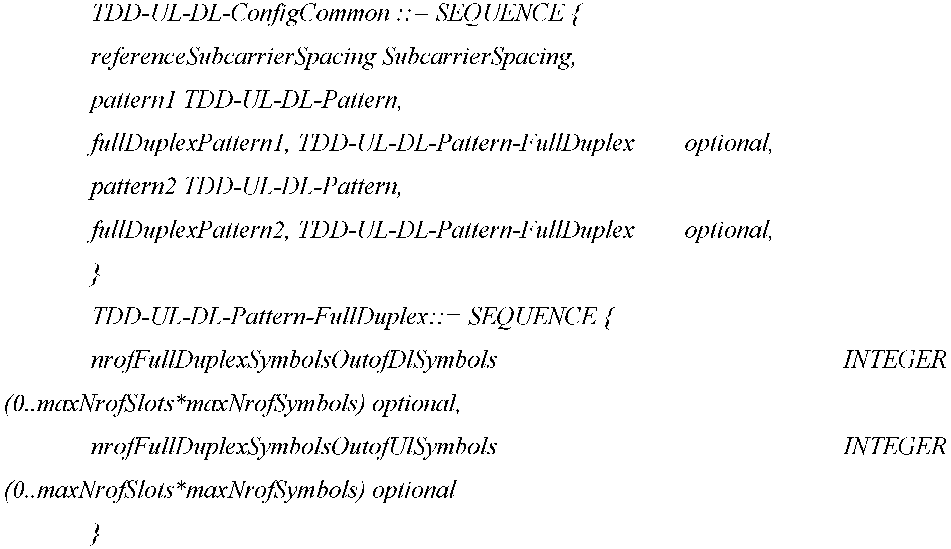

In the above UL-DL common configuration message, the *fullDuplexPattern1* and the *fullDuplexPattern2* represent the FD pattern field and indicate the FD mode enable indication information. In particular, the *fullDuplexPattern1* corresponds to pattern 1, that is, the *fullDuplexPattern1* means to further configure the FD parameters based on the frame structure parameters configured in the pattern 1. Accordingly, the *fullDuplexPattern2* corresponds to pattern 2, that is, the *fullDuplexPattern2* means to further configure the FD parameters based on the frame structure parameters configured in the pattern 2. In addition, the *nrofFullDuplexSymbolsOutofDlSymbols* and the *nrofFullDuplexSymbolsOutofUlSymbols* represent the FD pattern parameters. Combined with the target frame structure illustrated in FIG. 6A, it may set the value of the *nrofFullDuplexSymbolsOutofDlSymbols* to 5 and set the value of the *nrofFullDuplexSymbolsOutofUlSymbols* to 4.

Case 2: the FD pattern parameters corresponding to the one or more FD symbols are presented in the slot plus symbol granularity.

On the basis of TDD-UL-DL-ConfigCommon, the FD pattern parameters corresponding to the one or more FD symbols are introduced in the UL-DL common configuration message. The FD pattern parameters may be presented in a slot plus symbol way, i.e., be composed of a slot quantity and a symbol quantity together, which includes four main parameters:

*nrofFullDuplexSlotOutofDlSlots*: this parameter indicates the first FD slot quantity. If K1 consecutive FD symbols are configured in the target frame structure, this parameter indicates the number of complete slots occupied by the K1 FD symbols. Supposing that the complete slot includes 14 symbols, the number of complete slots occupied by the K1 FD symbols is 0 when K1 is less than 14, which means that the value of this parameter may be 0; the number of complete slots occupied by the K1 FD symbols is 1 when K1 is larger than or equal to 14 but less than 28, which means that the value of this parameter may be 1; the number of complete slots occupied by the K1 FD symbols is 2 when K1 is larger than or equal to 28 but less than 42, which means that the value of this parameter may be 2; and so on. This parameter shows the number of the consecutive FD symbols backward from the first symbol in the target period of the frame structure. The value of this parameter is of a positive integer type, from 0 to the maximum number of slots in a 10ms period, i.e., 0.. maxNrofSlots. This parameter is optional.

*nrofFullDuplexSymbolinDlorSpecialSlots*: this parameter indicates the third FD symbol quantity. If K1 consecutive FD symbols are configured in the target frame structure, this parameter indicates the number of FD symbols in the incomplete slot occupied by the K1 FD symbols. Supposing that the complete slot includes 14 symbols, the number of FD symbols in the incomplete slot occupied by the K1 FD symbols is K1 when K1 is less than 14, which means that the value of this parameter may be K1; the number of FD symbols in the incomplete slot occupied by the K1 FD symbols is (K1-14) when K1 is larger than or equal to 14 but less than 28, which means that the value of this parameter may be (K1-14); the number of FD symbols in the incomplete slot occupied by the K1 FD symbols is (K1-28) when K1 is larger than or equal to 28 but less than 42, which means that the value of this parameter may be (K1-28); and so on. Obviously, the value of the *nrofFullDuplexSlotOutofDlSlots* multiplied by the total number of symbols (e.g., 14) in the complete slot, plus the value of the *nrofFullDuplexSymbolinDlorSpecialSlots*, is K1.

This parameter shows the number of the consecutive FD symbols started from the first symbol behind the *nrofFullDuplexSlotOutofDlSlots.* The value of this parameter is of a positive integer type, from 0 to the maximum number of symbols in the slot, i.e., 0.. maxNrofSymbols. This parameter is optional and depends on the *nrofFullDuplexSlotOutofDlSlots.*

This parameter cannot be configured if the *nrofFullDuplexSlotOutofDlSlots* is not configured. Moreover, this parameter may or may not be configured even if the *nrofFullDuplexSlotOutofDlSlots* is configured.

*nrofFullDuplexSlotOutofUlSlots:* this parameter indicates the second FD slot quantity. If K2 consecutive FD symbols are configured in the target frame structure, this parameter indicates the number of complete slots occupied by the K2 FD symbols. The number of complete slots occupied by the K2 FD symbols is 0 when K2 is less than 14, which means that the value of this parameter is 0; the number of complete slots occupied by the K2 FD symbols is 1 when K2 is larger than or equal to 14 but less than 28, which means that the value of this parameter is 1; and so on. This parameter shows the number of the consecutive FD symbols forward from the last symbol in the target period of the frame structure. The value of this parameter is of a positive integer type, from 0 to the maximum number of slots in the 10ms period, i.e., 0.. maxNrofSlots. This parameter is optional.

*nroffullDuplexSymbolinUlorSpecialSlots*: this parameter indicates the fourth FD symbol quantity. If K2 consecutive FD symbols are configured in the target frame structure, this parameter indicates the number of FD symbols in the incomplete slot occupied by the K2 FD symbols. The number of FD symbols in the incomplete slot occupied by the K2 FD symbols is K2 when K2 is less than 14, which means that the value of this parameter is K2; the number of FD symbols in the incomplete slot occupied by the K2 FD symbols is (K2-14) when K2 is larger than or equal to 14 but less than 28, which means that the value of this parameter is (K2-14); and so on. Obviously, the value of the *nrofFullDuplexSlotOutofUlSlots* multiplied by the total number of symbols (e.g., 14) in the complete slot, plus the value of the *nroffullDuplexSymbolinUlorSpecialSlots*, is K2.

This parameter shows the number of the consecutive FD symbols forward from the last symbol before the *nrofFullDuplexSlotOutofDlSlots.* The value of this parameter is of a positive integer type, from 0 to the maximum number of symbols in the slot, i.e., 0.. maxNrofSymbols. This parameter is optional and depends on the *nrofFullDuplexSlotOutof UlSlots.*

This parameter cannot be configured if the *nrofFullDuplexSlotOutofUlSlots* is not configured. Moreover, this parameter may or may not be configured even if the *nrofFullDuplexSlotOutofUlSlots* is configured.

For the above Case 2, the pseudocode of the UL-DL common configuration message may be shown as follows:

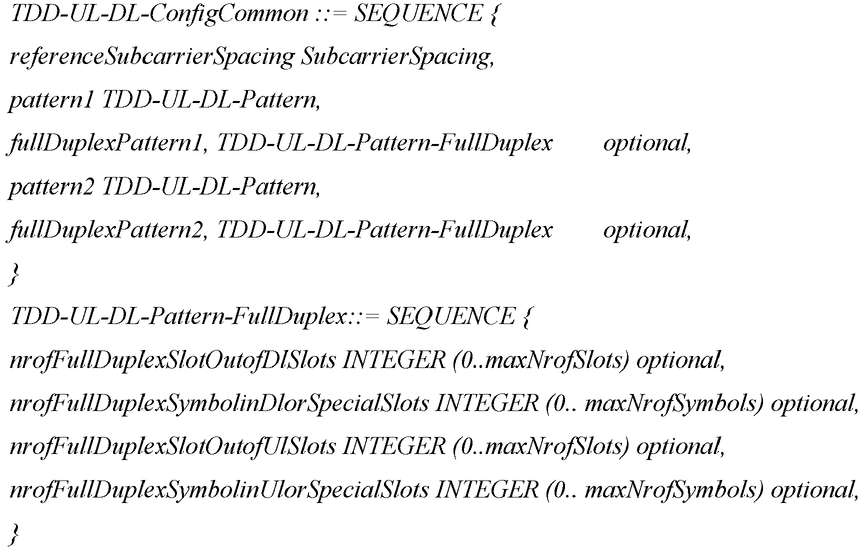

In particular, the *fullDuplexPattern1* corresponds to pattern 1, that is, the *fullDuplexPattern1* means to further configure the FD parameters based on the frame structure parameters configured in the pattern 1. Accordingly, the *fullDuplexPattern2* corresponds to pattern 2, that is, the *fullDuplexPattern2* means to further configure the FD parameters based on the frame structure parameters configured in the pattern 2. In the *TDD-UL-DL-Pattern-FullDuplex*, the first two parameters are configured as a pair, which are the FD pattern parameters related to one or more FD symbols in the DL slots, while the last two parameters are configured as another pair, which are the FD pattern parameters related to one or more FD symbols in the UL slots. Combined with the target frame structure illustrated in FIG. 6A, the value of the *nrofFullDuplexSlotOutofDlSlots* and the value of the *nrofFullDuplexSymbolinDlorSpecialSlot* are set to 0 and 5, respectively. In addition, it may set the value of the *nrofFullDuplexSlotsOutofUlSlots* and the value of the *nroffullDuplexSymbolinUlorSpecialSlots* to 0 and 4, respectively.

At step S14, the UE receives the UL-DL common configuration message from the BS.

At step S15, the UE enables the FD mode for itself based on the FD mode enable indication information if the UL-DL common configuration message includes the FD mode enable indication information.

The UE determines that the UL-DL common configuration message carries the FD mode enable indication information if the UL-DL common configuration message includes the FD pattern field, and enables the FD mode for itself. Alternatively, the UE determines that the UL-DL common configuration message does not carry the FD mode enable indication information if the UL-DL common configuration message does not include the FD pattern field, and does not enable the FD mode for itself.

If the FD mode is enabled for the UE, each symbol in the slot is expected by the UE to be the FD symbol, the F symbol, the DL symbol or the UL symbol, and the F symbol in the slot is expected by the UE to be used as the DL, the UL or a GP. If the FD mode is not enabled for the UE, each symbol in the slot is expected by the UE to be the F symbol, the DL symbol or the UL symbol, and the F symbol in the slot is expected by the UE to be used as the DL, the UL or the GP.

When carrying the FD mode enable indication information, the UL-DL common configuration message may be received via the SIB message (e.g., the SIB1 message) or via the RRC reconfiguration message. When the UL-DL common configuration message carrying the FD mode enable indication information is received via the SIB message, it may also clarify effective time of the FD mode. For example, the effective time of the UE enabling the FD mode is determined in the following schemes. Scheme 1: a slot next to a slot at which the SIB message is received, i.e., the slot next to the reception slot of the SIB message. That is, it becomes effective to enable the FD mode at the slot next to the slot at which the SIB message is received. Scheme 2: the M-th slot after the slot at which the SIB message is received, i.e., the M-th slot after the reception slot of the SIB message. That is, it becomes effective to enable the FD mode at the M-th slot after the slot at which the SIB message is received. The M is a fixed value agreed between the BS and the UE, and the M is a positive integer. Scheme 3: the first slot of a frame next to a frame in which the SIB message is received, i.e., the first slot of the frame next to the reception frame of the SIB message. That is, it becomes effective to enable the FD mode at the first slot of the frame next to the frame in which the SIB message is received. Scheme 4: the first slot of a period next to a period in which the SIB message is received, i.e., the first slot of the period next to the reception period of the SIB message. That is, it becomes effective to enable the FD mode at the first slot of the period next to the period in which the SIB message is received.

When the UL-DL common configuration message carrying the FD mode enable indication information is received via the RRC reconfiguration message, it may also clarify the effective time of enabling the FD mode. For example, the effective time of the UE enabling the FD mode is determined in the following scheme: a slot next to a slot at which the RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

When the BS transmits the UL-DL common configuration message carrying the FD mode enable indication information via the RRC reconfiguration message, the UE may transmit the RRC reconfiguration completion message to the BS after receiving the RRC reconfiguration message. Therefore, it may take the slot at which the RRC reconfiguration completion message corresponding to the RRC reconfiguration message is transmitted by the UE as a reference basis.

At step S16, the UE parses the frame structure parameters from the UL-DL common configuration message, and determines the target frame structure based on the frame structure parameters. The frame structure may include a plurality of slots, each of the slots may include a plurality of symbols, and the symbol may be the FD symbol, the F symbol, the DL symbol or the UL symbol.

When the symbols in the plurality of slots corresponding to the target frame structure include one or more FD symbols, the frame structure parameters may also include FD pattern parameters corresponding to the one or more FD symbols. The FD pattern parameters indicate the one or more FD symbols in the plurality of slots corresponding to the target frame structure, which means that the UE may determine the one or more FD symbols in the plurality of slots corresponding to the target frame structure based on the FD pattern parameters.

For example, a plurality of FD symbols, when included in the symbols in the slots corresponding to the target frame structure, are expected by the UE to be consecutive. The UE expects that K1 consecutive FD symbols are configured backward from the first symbol in the target period of the target frame structure if the target frame structure includes the K1 consecutive FD symbols, and/or, expects that K2 consecutive FD symbols are configured forward from the last symbol in the target period of the target frame structure if the target frame structure includes the K2 consecutive FD symbols.

By referring to Case 1 in step S13 as an example, the FD pattern parameters include the first FD symbol quantity and the second FD symbol quantity. On this basis, if the target frame structure includes the K1 consecutive FD symbols, the UE may determine the value of the K1 based on the first FD symbol quantity, and then determine the one or more FD symbols in the plurality of slots corresponding to the target frame structure based on the value of the K1. If the target frame structure includes the K2 consecutive FD symbols, the UE may determine the value of the K2 based on the second FD symbol quantity, and then determine the one or more FD symbols in the plurality of slots corresponding to the target frame structure based on the value of the K2.

By referring to Case 2 in step S13 as another example, the FD pattern parameters may include the first FD slot quantity, the third FD symbol quantity, the second FD slot quantity, and the fourth FD symbol quantity. On this basis, if the target frame structure includes the K1 consecutive FD symbols, the number of complete slots occupied by the K1 consecutive FD symbols is determined based on the first FD slot quantity and the number of FD symbols in the incomplete slot occupied by the K1 consecutive FD symbols is determined based on the third FD symbol quantity, so that the one or more FD symbols may be determined in the plurality of slots corresponding to the target frame structure based on the first FD slot quantity and the third FD symbol quantity, with Case 2 in step S13 as a reference of the determination manner. If the target frame structure includes the K2 consecutive FD symbols, the number of complete slots occupied by the K2 consecutive FD6 symbols is determined based on the second FD slot quantity and the number of FD symbols in the incomplete slot occupied by the K2 consecutive FD symbols is determined based on the fourth FD symbol quantity, so that the one or more FD symbols may be determined in the plurality of slots corresponding to the target frame structure based on the second FD slot quantity and the fourth FD symbol quantity, with Case 2 in step S13 as a reference of the determination manner.

At step S17, the BS and the UE perform their data processing based on the target frame structure.

In one example, if the operation mode of the BS is the FD-enabled mode and the FD mode is enabled for the UE, the plurality of symbols in the target frame structure may include the FD symbols, the F symbols, the DL symbols or the UL symbols. During performing the data processing based on the target frame structure, when a symbol in the slot is the FD symbol, the BS may process both the UL data and the DL data simultaneously on the time-domain resource related to the FD symbol, and the UE may process both the UL data and the DL data simultaneously on the time-domain resource related to the FD symbol. When a symbol in the slot is the DL symbol, the BS processes the DL data on the time-domain resource related to the DL symbol, and the UE processes the DL data on the time-domain resource related to the DL symbol. When a symbol in the slot is the UL symbol, the BS processes the UL data on the time-domain resource related to the UL symbol, and the UE processes the UL data on the time-domain resource related to the UL symbol. In addition, if the F symbol in the slot is used as the DL, the BS processes the DL data on the time-domain resource related to the F symbol, and the UE processes the DL data on the time-domain resource related to the F symbol. If the F symbol in the slot is used as the UL, the BS processes the UL data on the time-domain resource related to the F symbol, and the UE processes the UL data on the time-domain resource related to the F symbol.

In one example, if the operation mode of the BS is the FD-disabled mode and the FD mode is not enabled for the UE, the plurality of symbols in the target frame structure may include the F symbols, the DL symbols or the UL symbols. During performing the data processing based on the target frame structure, when a symbol in the slot is the DL symbol, the base station processes the DL data on the time-domain resource related to the DL symbol, and the UE processes the DL data on the time-domain resource related to the DL symbol. When a symbol in the slot is the UL symbol, the BS processes the UL data on the time-domain resource related to the UL symbol, and the UE processes the UL data on the time-domain resource related to the UL symbol. In addition, in the case a symbol in the slot is the F symbol, if the F symbol in the slot is used as the DL, the BS processes the DL data on the time-domain resource related to the F symbol, and the UE processes the DL data on the time-domain resource related to the F symbol. If the F symbol in the slot is used as the UL, the BS processes the UL data on the time-domain resource related to the F symbol, and the UE processes the UL data on the time-domain resource related to the F symbol.

In the above example, step S11 - step S17 are targeted at the UE that supports the FD mode. The UE that does not support the FD mode ignores the FD mode enable indication information and the FD pattern parameters and does not enable the FD mode for itself based on the FD mode enable indication information when receiving the UL-DL common configuration message from the BS. In this case, each symbol in a slot is expected by the UE to be the F symbol, the DL symbol or the UL symbol, and the F symbol in the slot is expected by the UE to be used as the DL, the UL or the GP.

During performing the data processing based on the target frame structure, when a symbol in the slot is the F symbol, the UE processes the DL data on the time-domain resource relates to the F symbol used as the DL, and processes the UL data on the time-domain resource related to the F symbol used as the UL.

From the perspective of the BS, after the FD mode is enabled, the BS may flexibly schedule the FD symbols according to service requirements and perform both transmission and reception operations simultaneously on the FD symbol.

The UE that does not support the FD mode does not expect the FD symbol to be configured for transmitting the UL data and receiving the DL data simultaneously. For different UE (e.g., the first UE and the second UE), the BS configures to transmit the UL data on the FD symbol corresponding to the first UE and to receive the DL data on the FD symbol corresponding to the second UE (which has the same location as the FD symbol corresponding to the first UE). Therefore, the BS may transmit the UL data and receive the DL data together on these FD symbols.

With respect to the UE that does not support the FD mode, sufficient GP resources for the UE to perform a UL-DL switching may be reserved during a conversion process between the DL data and the UL data.

With respect to the UE that supports the FD mode, the F symbol may be configured for transmitting the UL data and receiving the DL data simultaneously. That is, the UE transmits the UL data and receives the DL data simultaneously without reserving the GP resources.

In one example, the frame structure is determined through the TDD-UL-DL-ConfigCommon and the TDD-UL-DL-ConfigDedicated. The TDD-UL-DL-ConfigCommon is used for configuring the frame structure for all the UE in a serving cell. The F symbols configured through the TDD-UL-DL-ConfigCommon are changed through the TDD-UL-DL-ConfigDedicated to the UL or the DL to meet the service requirements. It may combine the TDD-UL-DL-ConfigCommon and the TDD-UL-DL-ConfigDedicated to complete the configuration of the frame structure for the FD mode.

On this basis, when the symbols in the plurality of slots corresponding to the target frame structure include one or more F symbols (which may be but have not been used as the DL, the UL or the GP), the BS may also transmit a UL-DL dedicated configuration message (TDD-UL-DL-ConfigDedicated) to the UE. The UL-DL dedicated configuration message includes an FD parameter indicating that the one or more F symbols are used as the FD. The UE may receive the UL-DL dedicated configuration message from the BS, and expect that the one or more F symbols are used as the FD when the UL-DL dedicated configuration message includes the FD parameter.

For example, a new parameter, e.g., parameter *TDD-UL-DL-ConfigDedicated-FullDuplex*, may be introduced into configuration parameters for a serving cell (ServingCellConfig), in which a parameter *TDD-UL-DL-SlotConfig-FullDuplex* is further introduced for configuring the one or more F symbols. The pseudocode of the configuration parameter *TDD-UL-DL-SlotConfig-FullDuplex* for the frame structure is shown as below:

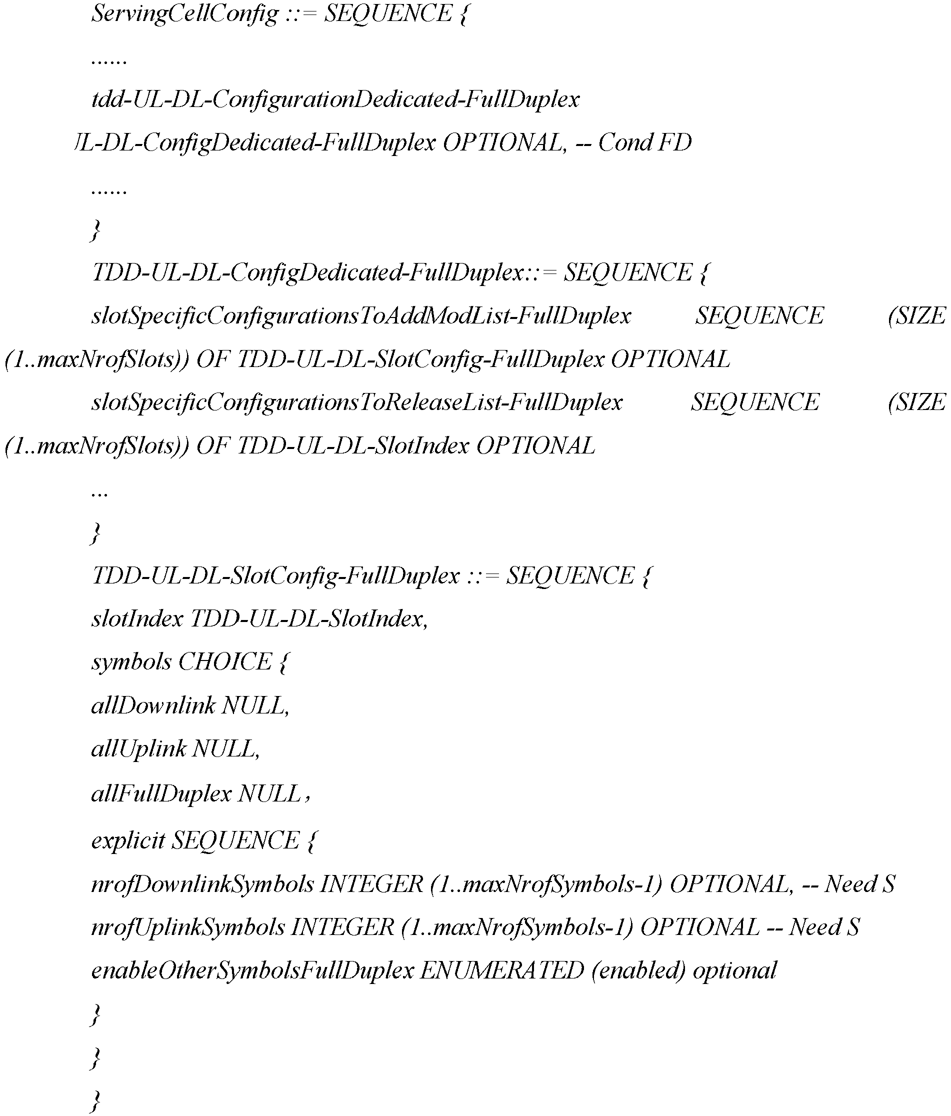

In the above codes, the *allFullDuplex* indicates that all symbols in the current slot are configured as FD symbols, and the *enableOtherSymbolsFullDuplex,* once configured, indicates that the symbols other than the DL symbols and the UL symbols may be used as FD symbols, and meanwhile the FD symbols may also be used as the GP for the UL-DL switching of the UE. If the *TDD-UL-DL-Pattern-FullDuplex* is not configured for the serving cell, the UE does not expect the *TDD-UL-DL-ConfigDedicated-FullDuplex* to be configured. In addition, if one or more FD symbols are configured in the TDD-UL-DL-ConfigDedicated, the UE does not expect to configure discrete FD symbols in the same slot. The UE in the HD mode does not expect the same FD symbol to be configured by the BS for transmitting the UL data and receiving the DL data simultaneously.

According to the above technical solutions, the operation mode of the BS may be classified into the FD-enabled mode and the FD-disabled mode. In the FD-enabled mode, each symbol in a slot is allowed to act as the FD symbol, that is, the function of the symbol in the slot is extended to act as the FD symbol, so that the UL data and the DL data are capable of being simultaneously processed on the time-domain resource related to the symbol in the slot acting as the FD symbol. Therefore, the UL data and the DL data can be simultaneously processed on the same time-domain resource, thereby utilizing time-domain resources more effectively, improving resource utilization, increasing a network coverage and a network capacity, and reducing a transmission delay, for example, reducing a UL transmission delay. Without affecting the current 5G system, the frame structure with fixed FD symbols is configured. After the configuration of the frame structure is completed, the BS and the UE can transmit and receive data according to the type of the frame structure. The BS and the UE in the FD mode can perform simultaneous transmission and reception, while the UE in the HD mode can only perform either the transmission or the reception at the same time, which can achieve the flexible configuration of the FD symbols.

Based on the same inventive concept, apparatuses for configuring a TDD frame structure corresponding to the above methods of configuring a TDD frame structure, BSs and UE are provided. Considering that the BSs and the UE solve problems in accordance with the similar principles to the above methods of configuring a TDD frame structure, the implementations of the BSs and the UE may make reference to the implementations of the methods, without giving unnecessary details of their repetitions.

Based on the same application concept as the methods described above, an apparatus for configuring a TDD frame structure is provided in one example of the present invention and is applied to a BS. The apparatus may include:
a determining module, configured to determine an operation mode of the BS, where the operation mode is either an FD-enabled mode or an FD-disabled mode, and where each symbol in a slot is allowed to act as an FD symbol, a DL symbol, a UL symbol or an F symbol in the FD-enabled mode, and to act as the DL symbol, the UL symbol or the F symbol in the FD-disabled mode; a transmitting module, configured to transmit, in the FD-enabled mode, FD mode enable indication information to UE for enabling an FD mode for the UE based on the FD mode enable indication information; and a processing module, configured to be capable of processing UL data and DL data simultaneously on a time-domain resource related to the FD symbol when a plurality of symbols in the slot include the FD symbol in the FD-enabled mode.

In one example, when transmitting the FD mode enable indication information to the UE, the transmitting module is specifically configured to: transmit a UL-DL common configuration message carrying the FD mode enable indication information to the UE. The UL-DL common configuration message carrying the FD mode enable indication information includes: the UL-DL common configuration message carrying the FD mode enable indication information if the UL-DL common configuration message includes an FD pattern field.

In one example, when the UL-DL common configuration message carrying the FD mode enable indication information is transmitted via an SIB message, the processing module is further configured to determine effective time of enabling the FD mode in the following scheme: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted.

When the UL-DL common configuration message carrying the FD mode enable indication information is transmitted via an RRC reconfiguration message, the processing module is further configured to determine the effective time of enabling the FD mode in the following scheme: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

The determining module is further configured to determine a target frame structure, where the target frame structure includes a plurality of slots, and each of the slots includes a plurality of symbols. The transmitting module is further configured to transmit the UL-DL common configuration message to the UE, where the UL-DL common configuration message includes frame structure parameters corresponding to the target frame structure, so that the UE determines the target frame structure based on the frame structure parameters, and where the frame structure parameters include FD pattern parameters corresponding to one or more FD symbols when the symbols in the plurality of slots corresponding to the target frame structure include the one or more FD symbols. The processing module is further configured to perform a data processing based on the target frame structure.

In one example, a plurality of FD symbols, when included in the symbols in the slots corresponding to the target frame structure, are consecutive. K1 consecutive FD symbols are configured backward from the first symbol in a target period of the target frame structure, where the K1 is a positive integer; and/or, K2 consecutive FD symbols are configured forward from the last symbol in the target period of the target frame structure, where the K2 is a positive integer.

In one example, the FD pattern parameters include the first FD symbol quantity and the second FD symbol quantity. The first FD symbol quantity indicates the value of the K1 if the K1 consecutive FD symbols are configured in the target frame structure. The second FD symbol quantity indicates the value of the K2 if the K2 consecutive FD symbols are configured in the target frame structure.

In one example, the FD pattern parameters include the first FD slot quantity and the third FD symbol quantity, and the second FD slot quantity and the fourth FD symbol quantity. The first FD slot quantity indicates the number of complete slots occupied by the K1 FD symbols and the third FD symbol quantity indicates the number of FD symbols in an incomplete slot occupied by the K1 FD symbols if the K1 consecutive FD symbols are configured in the target frame structure. The second FD slot quantity indicates the number of complete slots occupied by the K2 FD symbols and the fourth FD symbol quantity indicates the number of FD symbols in an incomplete slot occupied by the K2 FD symbols if the K2 consecutive FD symbols are configured in the target frame structure.

The transmitting module is further configured to transmit a UL-DL dedicated configuration message to the UE. The UL-DL dedicated configuration message includes an FD parameter indicating that one or more F symbols are used as FD.

Based on the same application concept as the methods described above, an apparatus for configuring a TDD frame structure is provided in one example of the present invention and is applied to UE that supports an FD mode. The apparatus may include:
a receiving module, configured to receive FD mode enable indication information from a BS, where the FD mode enable indication information is transmitted to the UE by the BS in an FD-enabled mode; an enabling module, configured to enable the FD mode for the UE based on the FD mode enable indication information, where after enabling the FD mode for the UE, each symbol in a slot is expected by the UE to act as an FD symbol, a DL symbol, a UL symbol or an F symbol; and a processing module, configured to be capable of processing UL data and DL data simultaneously on a time-domain resource related to the FD symbol when a plurality of symbols in the slot include the FD symbol after the FD mode is enabled for the UE.

In one example, when receiving the FD mode enable indication information from the BS, the receiving module is specifically configured to: receive a UL-DL common configuration message carrying the FD mode enable indication information from the BS. The UL-DL common configuration message carrying the FD mode enable indication information includes: the UL-DL common configuration message carrying the FD mode enable indication information if the UL-DL common configuration message includes an FD pattern field.

In one example, when the UL-DL common configuration message carrying the FD mode enable indication information is received via an SIB message, the processing module is further configured to determine effective time of enabling the FD mode in the following scheme: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

When the UL-DL common configuration message carrying the FD mode enable indication information is received via an RRC reconfiguration message, the processing module is further configured to determine effective time of enabling the FD mode in the following scheme: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

In one example, the receiving module is further configured to receive the UL-DL common configuration message from the BS, where the UL-DL common configuration message includes frame structure parameters corresponding to a target frame structure.

The processing module is further configured to determine the target frame structure based on the frame structure parameters. The target frame structure includes a plurality of slots, and each of the slots includes a plurality of symbols. The frame structure parameters include FD pattern parameters corresponding to one or more FD symbols when the symbols in the plurality of slots corresponding to the target frame structure include the one or more FD symbols. The FD pattern parameters indicate the one or more FD symbols in the plurality of slots corresponding to the target frame structure.

The processing module is further configured to perform a data processing based on the target frame structure.

In one example, a plurality of FD symbols, when included in the symbols in the slots corresponding to the target frame structure, are expected to be consecutive. K1 consecutive FD symbols are expected to be configured backward from the first symbol in a target period of the target frame structure, where the K1 is a positive integer; and/or, K2 consecutive FD symbols are expected to be configured forward from the last symbol in the target period of the target frame structure, where the K2 is a positive integer.

In one example, the FD pattern parameters include the first FD symbol quantity and the second FD symbol quantity. The processing module is further configured to: determine, if the target frame structure includes the K1 consecutive FD symbols, the value of the K1 based on the first FD symbol quantity and determine the FD symbols in the plurality of slots corresponding to the target frame structure based on the value of the K1; and determine, if the target frame structure includes the K2 consecutive FD symbols, the value of the K2 based on the second FD symbol quantity and determine the FD symbols in the plurality of slots corresponding to the target frame structure based on the value of the K2.

In one example, the FD pattern parameters include the first FD slot quantity and the third FD symbol quantity, and the second FD slot quantity and the fourth FD symbol quantity.

The processing module is further configured to: determine, if the target frame structure includes the K1 consecutive FD symbols, the first number of complete slots occupied by the K1 FD symbols based on the first FD slot quantity and the number of FD symbols in an incomplete slot occupied by the K1 FD symbols based on the third FD symbol quantity, and determine the FD symbols in the plurality of slots corresponding to the target frame structure based on the first FD slot quantity and the third FD symbol quantity; and determine, if the target frame structure includes the K2 consecutive FD symbols, the second number of complete slots occupied by the K2 FD symbols based on the second FD slot quantity and the number of FD symbols in an incomplete slot occupied by the K2 FD symbols based on the fourth FD symbol quantity, and determine the FD symbols in the plurality of slots corresponding to the target frame structure based on the second FD slot quantity and the fourth FD symbol quantity.

The receiving module is further configured to receive a UL-DL dedicated configuration message from the BS, where the UL-DL dedicated configuration message includes an FD parameter indicating that one or more F symbols are used as FD.

Based on the same application concept as the methods described above, an apparatus for configuring a TDD frame structure is provided in one example of the present invention and is applied to UE that does not support an FD mode. The apparatus may include:
a receiving module, configured to receive FD mode enable indication information from a BS, where the FD mode enable indication information is transmitted to the UE by the BS in an FD-enabled mode; an enabling module, configured to ignore the FD mode enable indication information; where each symbol in a slot is expected by the UE to act as a DL symbol, a UL symbol or an F symbol; and a processing module, configured to process DL data on a time-domain resource related to the symbol in the slot acting as the DL symbol, and process UL data on a time-domain resource related to the symbol in the slot acting as the UL symbol.

Based on the same application concept as the methods described above, an electronic device (such as the above BS or UE) is provided in one example of the present invention. The electronic device includes one or more processors and one or more machine-readable storage media. The one or more machine-readable storage media store machine-executable instructions capable of being executed by the one or more processors. The one or more processors are configured to execute the machine-executable instructions to implement the methods of configuring a TDD frame structure disclosed in the above examples of the present invention.

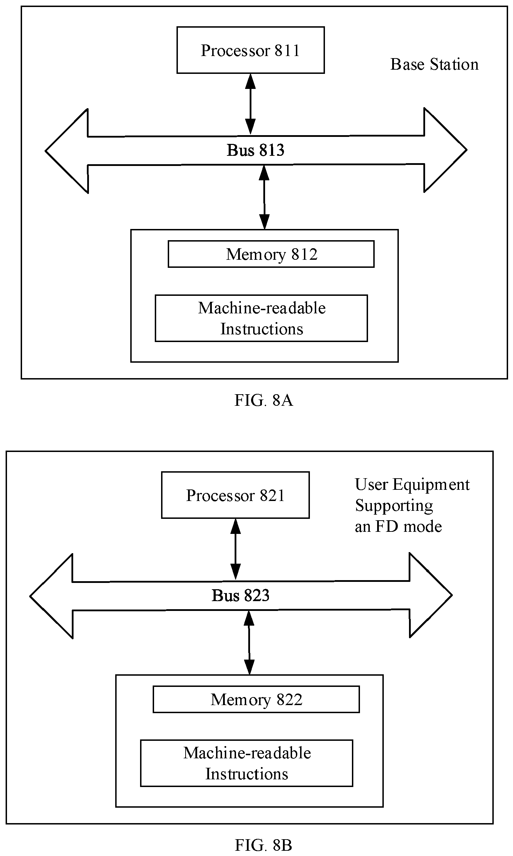

By referring to FIG. 8A, a BS is provided in one example of the present invention. The BS may include a processor 811, a memory 812, and a bus 813. The memory 812 stores machine-readable instructions executable by the processor 811. When the BS is in operation, the processor 811 communicates with the memory 812 via the bus 813. When the machine-readable instructions are executed by the processor 811, the following operations are performed:
determining an operation mode of the BS, where the operation mode is either an FD-enabled mode or an FD-disabled mode, and where each symbol in a slot is allowed to act as an FD symbol, a DL symbol, a UL symbol or an F symbol in the FD-enabled mode, and to act as the DL symbol, the UL symbol or the F symbol in the FD-disabled mode; and
transmitting, in the FD-enabled mode, FD mode enable indication information to UE for enabling an FD mode for the UE based on the FD mode enable indication information;
where in the FD-enabled mode, UL data and DL data are capable of being simultaneously processed on a time-domain resource related to the FD symbol when a plurality of symbols in the slot include the FD symbol.

The F symbol in the slot is allowed to be used as DL, UL or a guard period (GP) in the FD-enabled mode; and the F symbol in the slot is allowed to be used as the DL, the UL or the GP in the FD-disabled mode.

In the operations performed by the processor 811 in one example, transmitting the FD mode enable indication information to the UE includes: transmitting a UL-DL common configuration message carrying the FD mode enable indication information to the UE. The UL-DL common configuration message carrying the FD mode enable indication information includes: the UL-DL common configuration message carrying the FD mode enable indication information if the UL-DL common configuration message includes an FD pattern field.

In the operations performed by the processor 811 in one example, when the UL-DL common configuration message carrying the FD mode enable indication information is transmitted via an SIB message, effective time of enabling the FD mode includes: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted.

In the operations performed by the processor 811, when the UL-DL common configuration message carrying the FD mode enable indication information is transmitted via an RRC reconfiguration message, effective time of enabling the FD mode includes: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

In one example, when the machine-readable instructions are executed by the processor 811, the following operations are further performed: determining a target frame structure, where the target frame structure includes a plurality of slots, and each of the slots includes a plurality of symbols; transmitting the UL-DL common configuration message to the UE, where the UL-DL common configuration message includes frame structure parameters corresponding to the target frame structure, so that the UE determines the target frame structure based on the frame structure parameters, and where the frame structure parameters include FD pattern parameters corresponding to one or more FD symbols when the symbols in the plurality of slots corresponding to the target frame structure include the one or more FD symbols; and performing a data processing based on the target frame structure.

In the operations performed by the processor 811 in one example, a plurality of FD symbols, when included in the symbols in the slots corresponding to the target frame structure, are consecutive.

K1 consecutive FD symbols are configured backward from the first symbol in a target period of the target frame structure, where the K1 is a positive integer; and/or, K2 consecutive FD symbols are configured forward from the last symbol in the target period of the target frame structure, where the K2 is a positive integer.

In the operations performed by the processor 811, the FD pattern parameters include the first FD symbol quantity and the second FD symbol quantity. The first FD symbol quantity indicates the value of the K1 if the K1 consecutive FD symbols are configured in the target frame structure. The second FD symbol quantity indicates the value of the K2 if the K2 consecutive FD symbols are configured in the target frame structure.

In the operations performed by the processor 811 in one example, the FD pattern parameters include the first FD slot quantity and the third FD symbol quantity, and the second FD slot quantity and the fourth FD symbol quantity. The first FD slot quantity indicates the number of complete slots occupied by the K1 FD symbols and the third FD symbol quantity indicates the number of FD symbols in an incomplete slot occupied by the K1 FD symbols if the K1 consecutive FD symbols are configured in the target frame structure. The second FD slot quantity indicates the number of complete slots occupied by the K2 FD symbols and the fourth FD symbol quantity indicates the number of FD symbols in an incomplete slot occupied by the K2 FD symbols if the K2 consecutive FD symbols are configured in the target frame structure.

In one example, when the machine-readable instructions are executed by the processor 811, the following operations are further performed: transmitting a UL-DL dedicated configuration message to the UE. The UL-DL dedicated configuration message includes an FD parameter indicating that one or more F symbols are used as FD.

By referring to FIG. 8B, UE that supports an FD mode is provided in one example of the present invention. The UE may include a processor 821, a memory 822, and a bus 823. The memory 822 stores machine-readable instructions executable by the processor 821. When the UE is in operation, the processor 821 communicates with the memory 822 via the bus 823. When the machine-readable instructions are executed by the processor 821, the following operations are performed:
receiving FD mode enable indication information from a BS, where the FD mode enable indication information is transmitted to the UE by the BS in an FD-enabled mode; and
enabling the FD mode for the UE based on the FD mode enable indication information;
where after enabling the FD mode for the UE, each symbol in a slot is expected by the UE to act as an FD symbol, a DL symbol, a UL symbol or an F symbol; and
where after enabling the FD mode for the UE, UL data and DL data are capable of being simultaneously processed on a time-domain resource related to the FD symbol when a plurality of symbols in the slot include the FD symbol.

In one example, if the FD mode is not enabled for the UE, each symbol in the slot is expected by the UE to act as the DL symbol, the UL symbol or the F symbol. If the FD mode is not enabled for the UE, the DL data is processed on a time-domain resource related to the DL symbol when the plurality of symbols in the slot include the DL symbol, and the UL data is processed on a time-domain resource related to the UL symbol when the plurality of symbols in the slot include the UL symbol.

In one example, the F symbol in the slot is expected by the UE to be used as DL, UL or a GP if the FD mode is enabled for the UE. Alternatively, the F symbol in the slot is expected by the UE to be used as the DL, the UL or the GP if the FD mode is not enabled for the UE.

In the operations performed by the processor 821 in one example, receiving the FD mode enable indication information from the BS includes: receiving a UL-DL common configuration message carrying the FD mode enable indication information from the BS. The UL-DL common configuration message carrying the FD mode enable indication information includes: the UL-DL common configuration message carrying the FD mode enable indication information when the UL-DL common configuration message includes an FD pattern field.

In the operations performed by the processor 821, when the UL-DL common configuration message carrying the FD mode enable indication information is received via an SIB message, effective time of the UE enabling the FD mode includes: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

In the operations performed by the processor 821 in one example, when the UL-DL common configuration message carrying the FD mode enable indication information is received via an RRC reconfiguration message, effective time of the UE enabling the FD mode includes: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

In one example, when the machine-readable instructions are executed by the processor 821, the following operations are further performed: receiving the UL-DL common configuration message from the BS, where the UL-DL common configuration message includes frame structure parameters corresponding to a target frame structure, and determining the target frame structure based on the frame structure parameters; where the target frame structure includes a plurality of slots, and each of the slots includes a plurality of symbols, where the frame structure parameters include FD pattern parameters corresponding to one or more FD symbols when the symbols in the plurality of slots corresponding to the target frame structure include the one or more FD symbols, and where the FD pattern parameters indicate the one or more FD symbols in the plurality of slots corresponding to the target frame structure; and performing a data processing based on the target frame structure.

In the operations performed by the processor 821 in one example, a plurality of FD symbols, when included in the symbols in the slots corresponding to the target frame structure, are expected to be consecutive. K1 consecutive FD symbols are expected to be configured backward from the first symbol in a target period of the target frame structure, where the K1 is a positive integer; and/or, K2 consecutive FD symbols are expected to be configured forward from the last symbol in the target period of the target frame structure, where the K2 is a positive integer.

In the operations performed by the processor 821 in one example, the FD pattern parameters include the first FD symbol quantity and the second FD symbol quantity. If the target frame structure includes the K1 consecutive FD symbols, the value of the K1 is determined based on the first FD symbol quantity and the FD symbols are determined in the plurality of slots corresponding to the target frame structure based on the value of the K1. If the target frame structure includes the K2 consecutive FD symbols, the value of the K2 is determined based on the second FD symbol quantity and the FD symbols are determined in the plurality of slots corresponding to the target frame structure based on the value of the K2.

In the operations performed by the processor 821, the FD pattern parameters include the first FD slot quantity and the third FD symbol quantity, and the second FD slot quantity and the fourth FD symbol quantity. If the target frame structure includes the K1 consecutive FD symbols, the first number of complete slots occupied by the K1 FD symbols is determined based on the first FD slot quantity and the number of FD symbols in an incomplete slot occupied by the K1 FD symbols is determined based on the third FD symbol quantity, and the FD symbols are determined in the plurality of slots corresponding to the target frame structure based on the first FD slot quantity and the third FD symbol quantity. If the target frame structure includes the K2 consecutive FD symbols, the second number of complete slots occupied by the K2 FD symbols is determined based on the second FD slot quantity and the number of FD symbols in an incomplete slot occupied by the K2 FD symbols is determined based on the fourth FD symbol quantity, and the FD symbols are determined in the plurality of slots corresponding to the target frame structure based on the second FD slot quantity and the fourth FD symbol quantity.

In one example, when the machine-readable instructions are executed by the processor 821, the following operations are further performed: receiving a UL-DL dedicated configuration message from the BS. The UL-DL dedicated configuration message includes an FD parameter indicating that one or more F symbols are used as FD.

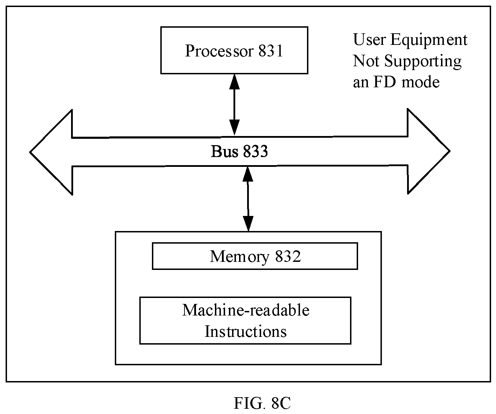

By referring to FIG. 8C, UE that does not support an FD mode is provided in one example of the present invention. The UE may include a processor 831, a memory 832, and a bus 833. The memory 832 stores machine-readable instructions executable by the processor 831. When the UE is in operation, the processor 831 communicates with the memory 832 via the bus 833. When the machine-readable instructions are executed by the processor 831, the following operations are performed:
receiving FD mode enable indication information from a BS, where the FD mode enable indication information is transmitted to the UE by the BS in an FD-enabled mode; and
ignoring the FD mode enable indication information;
where each symbol in a slot is expected by the UE to act as a DL symbol, a UL symbol or an F symbol; where DL data is processed on a time-domain resource related to the symbol in the slot acting as the DL symbol; and where UL data is processed on a time-domain resource related to the symbol in the slot acting as the UL symbol.

Based on the same application concept as the above methods, a machine-readable storage medium is provided in one example of the present invention and has various computer instructions stored thereon. When being executed by one or more processors, the computer instructions are capable of implementing the methods of configuring a TDD frame structure disclosed in the above examples of the present invention.

The machine-readable storage medium may be any physical storage device, e.g., electronic, magnetic, optical, or another, and may contain or store information such as executable instructions and data. For example, the machine-readable storage medium may be: a random access memory (RAM), a volatile memory, a non-volatile memory, a flash memory, a storage drive (e.g., a hard disk drive), a solid state disk, any type of storage disk (e.g., a compact disk (CD), a digital videodisk (DVD), etc.), a similar storage medium, or a combination thereof.

The systems, apparatus, modules, or units illustrated in the above examples may be implemented specifically by a computer chip or entity, or by a product having some functionality. An typical implementation device is a computer, and the specific form of the computer may be a personal computer, a laptop computer, a cellular phone, a camera phone, a smart phone, a personal digital assistant, a media player, a navigation device, an email transmitting and receiving device, a gaming console, a tablet computer, a wearable device, or a combination of any of these devices.

For convenience of description, the above apparatuses are described separately in terms of various units which are divided based on functions. Of course, the functions of the various units may be implemented in the same software and/or hardware or multiple softwares and/or hardwares when the present invention is implemented.

It should be understood by those skilled in the art that the examples of the present invention may be provided as methods, systems, or computer program products. Accordingly, the examples of the present invention may take the form of an entirely hardware, an entirely software, or a combination of software and hardware. Further, the examples of the present invention may take the form of a computer program product implemented on one or more computer-usable storage media (including, but not limited to, one or more disk memories, one or more CD-ROMs, one or more optical memories, etc.) that contain computer-usable program codes therein.

The present invention is described by reference to flowcharts and/or block diagrams of the methods, the apparatuses (systems), and the computer program products according to the examples of the present invention. It should be understood that each procedure in the flowcharts and/or each block in the block diagrams, and the combination of certain procedures in the flowcharts and/or the combination of certain blocks in the block diagrams, may be implemented by computer program instructions. These computer program instructions may be provided to one or more processors of a general computer, a specialized computer, an embedded processing device or another programmable data processing device to produce a machine, so that the instructions executed by the one or more processors of the computer or another programmable data processing device produce one or more apparatuses for implementing the functions specified by one or more procedures in the flowcharts and/or one or more blocks in the block diagrams.

In addition, these computer program instructions may also be stored in one or more computer-readable memories capable of directing a computer or another programmable data processing device to operate in a particular manner, so that the instructions stored in the one or more computer-readable memories produce one or more manufactures, each of which includes an instruction device that implements the functions specified by one or more procedures in the flowcharts and/or one or more blocks in the block diagrams.

These computer program instructions may also be loaded onto a computer or another programmable data processing device, so that a series of operational steps are performed on the computer or another programmable device to produce a computer-implemented processing. Thereby, the instructions executed on the computer or another programmable device provide steps for implementing the functions specified by one or more procedures in the flowcharts and/or one or more blocks in the block diagrams.

The foregoing is merely examples of the present invention and is not intended to limit the present invention. The present invention is subject to various changes and variations for those skilled in the art. Any modifications, equivalent substitutions, improvements, etc. made within the spirit and principle of the present invention shall be included within the scope of the claims of the present invention.

## Claims

1. A method of configuring a time division duplex, TDD, frame structure, being applicable to a base station, BS, comprising:
determining an operation mode of the BS, wherein the operation mode is either a full duplex enabled, FD-enabled, mode or an FD-disabled mode, and wherein each symbol in a slot is allowed to act as an FD symbol, a downlink, DL, symbol, an uplink, UL, symbol or a flexible, F, symbol in the FD-enabled mode, and to act as the DL symbol, the UL symbol or the F symbol in the FD-disabled mode; and
transmitting, in the FD-enabled mode, FD mode enable indication information to user equipment, UE, for enabling an FD mode for the UE based on the FD mode enable indication information;
wherein in the FD-enabled mode, UL data and DL data are capable of being simultaneously processed on a time-domain resource related to the FD symbol when a plurality of symbols in the slot comprise the FD symbol.

2. The method according to claim 1, wherein
the F symbol in the slot is allowed to be used as DL, UL or a guard period, GP, in the FD-enabled mode; and
the F symbol in the slot is allowed to be used as the DL, the UL or the GP in the FD-disabled mode.

3. The method according to claim 1, wherein transmitting the FD mode enable indication information to the UE comprises:
transmitting a UL-DL common configuration message carrying the FD mode enable indication information to the UE.

4. The method according to claim 3, wherein the UL-DL common configuration message carrying the FD mode enable indication information comprises:
the UL-DL common configuration message carrying the FD mode enable indication information when the UL-DL common configuration message comprises an FD pattern field.

5. The method according to claim 3, wherein when the UL-DL common configuration message carrying the FD mode enable indication information is transmitted via a system information block, SIB, message, effective time of enabling the FD mode comprises:
a slot next to a slot at which the SIB message is transmitted; or
an M-th slot after the slot at which the SIB message is transmitted, wherein the M is a fixed value agreed between the BS and the UE, and the M is a positive integer; or
a first slot of a frame next to a frame in which the SIB message is transmitted; or
a first slot of a period next to a period in which the SIB message is transmitted.

6. The method according to claim 3, wherein when the UL-DL common configuration message carrying the FD mode enable indication information is transmitted via a radio resource control, RRC, reconfiguration message, effective time of enabling the FD mode comprises:
a slot next to a slot at which an RRC reconfiguration completion message corresponding to the RRC reconfiguration message is received; or
an M-th slot after the slot at which the RRC reconfiguration completion message corresponding to the RRC reconfiguration message is received, wherein the M is a fixed value agreed between the BS and the UE, and the M is a positive integer.

7. The method according to any one of claims 1 - 6, wherein before the UL data and the DL data are capable of being simultaneously processed on the time-domain resource related to the FD symbol when the plurality of symbols in the slot comprise the FD symbol, the method further comprises:
determining a target frame structure, wherein the target frame structure comprises a plurality of slots, and each of the slots comprises the plurality of symbols;
transmitting a UL-DL common configuration message to the UE, wherein the UL-DL common configuration message comprises frame structure parameters corresponding to the target frame structure, so that the UE determines the target frame structure based on the frame structure parameters, and wherein the frame structure parameters comprise FD pattern parameters corresponding to one or more FD symbols when the symbols in the plurality of slots corresponding to the target frame structure comprise the one or more FD symbols; and
performing a data processing based on the target frame structure.

8. The method according to claim 7, wherein a plurality of FD symbols, when comprised in the symbols in the slots corresponding to the target frame structure, are consecutive.

9. The method according to claim 8, configuring at least one of:
K1 consecutive FD symbols backward from a first symbol in a target period of the target frame structure, wherein the K1 is a positive integer; or
K2 consecutive FD symbols forward from a last symbol in the target period of the target frame structure, wherein the K2 is a positive integer.

10. The method according to claim 9, wherein the FD pattern parameters comprise a first FD symbol quantity and a second FD symbol quantity;
wherein the first FD symbol quantity indicates a value of the K1 when the K1 consecutive FD symbols are configured in the target frame structure; and
wherein the second FD symbol quantity indicates a value of the K2 when the K2 consecutive FD symbols are configured in the target frame structure.

11. The method according to claim 9, wherein the FD pattern parameters comprise a first FD slot quantity and a third FD symbol quantity, and a second FD slot quantity and a fourth FD symbol quantity;
wherein the first FD slot quantity indicates a number of complete slots occupied by the K1 FD symbols and the third FD symbol quantity indicates a number of FD symbols in an incomplete slot occupied by the K1 FD symbols when the K1 consecutive FD symbols are configured in the target frame structure; and
wherein the second FD slot quantity indicates a number of complete slots occupied by the K2 FD symbols and the fourth FD symbol quantity indicates a number of FD symbols in an incomplete slot occupied by the K2 FD symbols when the K2 consecutive FD symbols are configured in the target frame structure.

12. The method according to claim 7, wherein after transmitting the UL-DL common configuration message to the UE when the symbols in the plurality of slots corresponding to the target frame structure comprise the one or more FD symbols, the method further comprises:
transmitting a UL-DL dedicated configuration message to the UE, wherein the UL-DL dedicated configuration message comprises an FD parameter indicating that one or more F symbols are used as FD.

13. A method of configuring a time division duplex, TDD, frame structure, being applicable to user equipment, UE, that supports a full duplex, FD, mode, comprising.
receiving FD mode enable indication information from a base station, BS, wherein the FD mode enable indication information is transmitted to the UE by the BS in an FD-enabled mode; and
enabling an FD mode for the UE based on the FD mode enable indication information; wherein after enabling the FD mode for the UE,
each symbol in a slot is expected by the UE to act as an FD symbol, a downlink, DL, symbol, an uplink, UL, symbol or a flexible, F, symbol; and
UL data and DL data are capable of being simultaneously processed on a time-domain resource related to the FD symbol when a plurality of symbols in the slot comprises the FD symbol.

14. The method according to claim 13, wherein when the FD mode is not enabled for the UE,
each symbol in the slot is expected by the UE to act as the DL symbol, the UL symbol or the F symbol;
wherein the DL data is processed on a time-domain resource related to the DL symbol when the plurality of symbols in the slot comprises the DL symbol, and the UL data is processed on a time-domain resource related to the UL symbol when the plurality of symbols in the slot comprises the UL symbol.

15. The method according to claim 14, wherein
the F symbol in the slot is expected by the UE to be used as DL, UL or a guard period, GP, when the FD mode is enabled for the UE; and
the F symbol in the slot is expected by the UE to be used as the DL, the UL or the GP when the FD mode is not enabled for the UE.

16. The method according to claim 13, wherein receiving the FD mode enable indication information from the BS comprises:
receiving a UL-DL common configuration message carrying the FD mode enable indication information from the BS.

17. The method according to claim 16, wherein the UL-DL common configuration message carrying the FD mode enable indication information comprises:
the UL-DL common configuration message carrying the FD mode enable indication information when the UL-DL common configuration message comprises an FD pattern field.

18. The method according to claim 16, when the UL-DL common configuration message carrying the FD mode enable indication information is received via a system information block, SIB, message, effective time of the UE enabling the FD mode comprises:
a slot next to a slot at which the SIB message is received; or
an M-th slot after the slot at which the SIB message is received, wherein the M is a fixed value agreed between the BS and the UE, and the M is a positive integer; or
a first slot of a frame next to a frame in which the SIB message is received; or
a first slot of a period next to a period in which the SIB message is received.

19. The method according to claim 16, when the UL-DL common configuration message carrying the FD mode enable indication information is received via a radio resource control, RRC, reconfiguration message, effective time of the UE enabling the FD mode comprises:
a slot next to a slot at which an RRC reconfiguration completion message corresponding to the RRC reconfiguration message is transmitted; or
an M-th slot after the slot at which the RRC reconfiguration completion message corresponding to the RRC reconfiguration message is transmitted, wherein the M is a fixed value agreed between the BS and the UE, and the M is a positive integer.

20. The method according to any one of claims 13 - 19, wherein before the UL data and the DL data are capable of being simultaneously processed on the time-domain resource related to the FD symbol when the plurality of symbols in the slot comprise the FD symbol, the method further comprises:
receiving a UL-DL common configuration message from the BS, wherein the UL-DL common configuration message comprises frame structure parameters corresponding to a target frame structure;
determining the target frame structure based on the frame structure parameters, wherein the target frame structure comprises a plurality of slots, and each of the slots comprises the plurality of symbols, wherein the frame structure parameters comprise FD pattern parameters corresponding to one or more FD symbols when the symbols in the plurality of slots corresponding to the target frame structure comprise the one or more FD symbols, and wherein the FD pattern parameters indicate the one or more FD symbols in the plurality of slots corresponding to the target frame structure; and
performing a data processing based on the target frame structure.

21. The method according to claim 20, wherein a plurality of FD symbols, when comprised in the symbols in the slots corresponding to the target frame structure, are expected to be consecutive.

22. The method according to claim 21, wherein expecting to configure at least one of:
K1 consecutive FD symbols backward from a first symbol in a target period of the target frame structure, wherein the K1 is a positive integer; or
K2 consecutive FD symbols forward from a last symbol in the target period of the target frame structure, wherein the K2 is a positive integer.

23. The method according to claim 22, wherein the FD pattern parameters comprise a first FD symbol quantity and a second FD symbol quantity; and the method further comprises:
determining, when the target frame structure comprises the K1 consecutive FD symbols, a value of the K1 based on the first FD symbol quantity and determining the FD symbols in the plurality of slots corresponding to the target frame structure based on the value of the K1; and
determining, when the target frame structure comprises the K2 consecutive FD symbols, a value of the K2 based on the second FD symbol quantity and determining the FD symbols in the plurality of slots corresponding to the target frame structure based on the value of the K2.

24. The method according to claim 22, wherein the FD pattern parameters comprise a first FD slot quantity and a third FD symbol quantity, and a second FD slot quantity and a fourth FD symbol quantity; and the method further comprises:
determining, when the target frame structure comprises the K1 consecutive FD symbols, a first number of complete slots occupied by the K1 FD symbols based on the first FD slot quantity and a number of FD symbols in an incomplete slot occupied by the K1 FD symbols based on the third FD symbol quantity, and determining the FD symbols in the plurality of slots corresponding to the target frame structure based on the first FD slot quantity and the third FD symbol quantity; and
determining, when the target frame structure comprises the K2 consecutive FD symbols, a second number of complete slots occupied by the K2 FD symbols based on the second FD slot quantity and a number of FD symbols in an incomplete slot occupied by the K2 FD symbols based on the fourth FD symbol quantity, and determining the FD symbols in the plurality of slots corresponding to the target frame structure based on the second FD slot quantity and the fourth FD symbol quantity.

25. The method according to claim 20, wherein after receiving the UL-DL common configuration message from the BS when the symbols in the plurality of slots corresponding to the target frame structure comprises one or more F symbols, the method further comprises:
receiving a UL-DL dedicated configuration message from the BS, wherein the UL-DL dedicated configuration message comprises an FD parameter indicating that the one or more F symbols are used as FD.

26. A method of configuring a time division duplex, TDD, frame structure, being applicable to user equipment, UE, that does not support a full duplex, FD, mode, comprising.
receiving FD mode enable indication information from a base station, BS, wherein the FD mode enable indication information is transmitted to the UE by the BS in an FD-enabled mode; and
ignoring the FD mode enable indication information;
wherein each symbol in a slot is expected by the UE to act as a downlink, DL, symbol, an uplink, UL, symbol or a flexible, F, symbol;
wherein DL data is processed on a time-domain resource related to the symbol in the slot acting as the DL symbol; and
wherein UL data is processed on a time-domain resource related to the symbol in the slot acting as the UL symbol.

27. An apparatus for configuring a time division duplex, TDD, frame structure, being applicable to a base station, BS, comprising:
a determining module, configured to determine an operation mode of the BS, wherein the operation mode is either a full duplex enabled, FD-enabled, mode or an FD-disabled mode, and wherein each symbol in a slot is allowed to act as an FD symbol, a downlink, DL, symbol, an uplink, UL symbol or a flexible, F, symbol in the FD-enabled mode, and to act as the DL symbol, the UL symbol or the F symbol in the FD-disabled mode;
a transmitting module, configured to transmit, in the FD-enabled mode, FD mode enable indication information to user equipment, UE, for enabling an FD mode for the UE based on the FD mode enable indication information; and
a processing module, configured to be capable of processing UL data and DL data simultaneously on a time-domain resource related to the FD symbol when a plurality of symbols in the slot comprise the FD symbol in the FD-enabled mode.

28. The apparatus according to claim 27, wherein when transmitting the FD mode enable indication information to the UE, the transmitting module is configured to:
transmit a UL-DL common configuration message carrying the FD mode enable indication information to the UE,
wherein the UL-DL common configuration message carrying the FD mode enable indication information comprises: the UL-DL common configuration message carrying the FD mode enable indication information when the UL-DL common configuration message comprises an FD pattern field.

29. The apparatus according to claim 28,
wherein when the UL-DL common configuration message carrying the FD mode enable indication information is transmitted via a system information block, SIB, message, the processing module is further configured to determine effective time of enabling the FD mode as:
a slot next to a slot at which the SIB message is transmitted; or
an M-th slot after the slot at which the SIB message is transmitted, wherein the M is a fixed value agreed between the BS and the UE, and the M is a positive integer; or
a first slot of a frame next to a frame in which the SIB message is transmitted; or
a first slot of a period next to a period in which the SIB message is transmitted;
wherein when the UL-DL common configuration message carrying the FD mode enable indication information is transmitted via a radio resource control, RRC, reconfiguration message, the processing module is further configured to determine the effective time of enabling the FD mode as:
a slot next to a slot at which an RRC reconfiguration completion message corresponding to the RRC reconfiguration message is received; or
an M-th slot after the slot at which the RRC reconfiguration completion message corresponding to the RRC reconfiguration message is received, wherein the M is a fixed value agreed between the BS and the UE, and the M is a positive integer.

30. The apparatus according to any one of claims 27 - 29, wherein
the determining module is further configured to determine a target frame structure, wherein the target frame structure comprises a plurality of slots, and each of the slots comprises the plurality of symbols;
the transmitting module is further configured to transmit a UL-DL common configuration message to the UE, wherein the UL-DL common configuration message comprises frame structure parameters corresponding to the target frame structure, so that the UE determines the target frame structure based on the frame structure parameters, and wherein the frame structure parameters comprise FD pattern parameters corresponding to one or more FD symbols when the symbols in the plurality of slots corresponding to the target frame structure comprise the one or more FD symbols; and
the processing module is further configured to perform a data processing based on the target frame structure.

31. The apparatus according to claim 30, wherein a plurality of FD symbols, when comprised in the symbols in the slots corresponding to the target frame structure, are consecutive;
wherein it is to configure at least one of:
K1 consecutive FD symbols backward from a first symbol in a target period of the target frame structure, wherein the K1 is a positive integer; or
K2 consecutive FD symbols forward from a last symbol in the target period of the target frame structure, wherein the K2 is a positive integer.

32. The apparatus according to claim 31, wherein the FD pattern parameters comprise a first FD symbol quantity and a second FD symbol quantity;
wherein the first FD symbol quantity indicates a value of the K1 when the K1 consecutive FD symbols are configured in the target frame structure; and
wherein the second FD symbol quantity indicates a value of the K2 when the K2 consecutive FD symbols are configured in the target frame structure.

33. The apparatus according to claim 31, wherein the FD pattern parameters comprise a first FD slot quantity and a third FD symbol quantity, and a second FD slot quantity and a fourth FD symbol quantity;
wherein the first FD slot quantity indicates a number of complete slots occupied by the K1 FD symbols and the third FD symbol quantity indicates a number of FD symbols in an incomplete slot occupied by the K1 FD symbols when the K1 consecutive FD symbols are configured in the target frame structure; and
wherein the second FD slot quantity indicates a number of complete slots occupied by the K2 FD symbols and the fourth FD symbol quantity indicates a number of FD symbols in an incomplete slot occupied by the K2 FD symbols when the K2 consecutive FD symbols are configured in the target frame structure.

34. The apparatus according to claim 31, wherein the transmitting module is further configured to transmit a UL-DL dedicated configuration message to the UE, wherein the UL-DL dedicated configuration message comprises an FD parameter indicating that one or more F symbols are used as FD.

35. An apparatus for configuring a time division duplex, TDD, frame structure, being applicable to user equipment, UE, that supports a full duplex, FD, mode, comprising.
a receiving module, configured to receive FD mode enable indication information from a base station, BS, wherein the FD mode enable indication information is transmitted to the UE by the BS in an FD-enabled mode;
an enabling module, configured to enable the FD mode for the UE based on the FD mode enable indication information; wherein after enabling the FD mode for the UE, each symbol in a slot is expected by the UE to act as an FD symbol, a downlink, DL, symbol, an uplink, UL, symbol or a flexible, F, symbol; and
a processing module, configured to be capable of processing UL data and DL data simultaneously on a time-domain resource related to the FD symbol when a plurality of symbols in the slot comprises the FD symbol after the FD mode is enabled for the UE.

36. The apparatus according to claim 35, wherein when receiving the FD mode enable indication information from the BS, the receiving module is configured to:
receive a UL-DL common configuration message carrying the FD mode enable indication information from the BS,
wherein the UL-DL common configuration message carrying the FD mode enable indication information comprises: the UL-DL common configuration message carrying the FD mode enable indication information when the UL-DL common configuration message comprises an FD pattern field.

37. The apparatus according to claim 36,
wherein when the UL-DL common configuration message carrying the FD mode enable indication information is received via a system information block, SIB, message, the processing module is further configured to determine effective time of enabling the FD mode as:
a slot next to a slot at which the SIB message is received; or
an M-th slot after the slot at which the SIB message is received, wherein the M is a fixed value agreed between the BS and the UE, and the M is a positive integer; or
a first slot of a frame next to a frame in which the SIB message is received; or
a first slot of a period next to a period in which the SIB message is received;
wherein when the UL-DL common configuration message carrying the FD mode enable indication information is received via a radio resource control, RRC, reconfiguration message, the processing module is configured to determine effective time of enabling the FD mode as:
a slot next to a slot at which an RRC reconfiguration completion message corresponding to the RRC reconfiguration message is transmitted; or
an M-th slot after the slot at which the RRC reconfiguration completion message corresponding to the RRC reconfiguration message is transmitted, wherein the M is a fixed value agreed between the BS and the UE, and the M is a positive integer.

38. The apparatus according to any one of claims 35 - 37, wherein
the receiving module is further configured to receive a UL-DL common configuration message from the BS, wherein the UL-DL common configuration message comprises frame structure parameters corresponding to a target frame structure;
the processing module is further configured to determine the target frame structure based on the frame structure parameters, wherein the target frame structure comprises a plurality of slots, and each of the slots comprises the plurality of symbols, wherein the frame structure parameters comprise FD pattern parameters corresponding to one or more FD symbols when the symbols in the plurality of slots corresponding to the target frame structure comprise the one or more FD symbols, and wherein the FD pattern parameters indicate the one or more FD symbols in the plurality of slots corresponding to the target frame structure; and
the processing module is further configured to perform a data processing based on the target frame structure.

39. The apparatus according to claim 38, wherein a plurality of FD symbols, when comprised in the symbols in the slots corresponding to the target frame structure, are expected to be consecutive; and it is expected to configure at least one of:
K1 consecutive FD symbols backward from a first symbol in a target period of the target frame structure, wherein the K1 is a positive integer; or
K2 consecutive FD symbols forward from a last symbol in the target period of the target frame structure, wherein the K2 is a positive integer.

40. The apparatus according to claim 39, wherein the FD pattern parameters comprise a first FD symbol quantity and a second FD symbol quantity, and the processing module is further configured to:
determine, when the target frame structure comprises the K1 consecutive FD symbols, a value of the K1 based on the first FD symbol quantity and determine the FD symbols in the plurality of slots corresponding to the target frame structure based on the value of the K1; and
determine, when the target frame structure comprises the K2 consecutive FD symbols, a value of the K2 based on the second FD symbol quantity and determine the FD symbols in the plurality of slots corresponding to the target frame structure based on the value of the K2.

41. The apparatus according to claim 39, wherein the FD pattern parameters comprise a first FD slot quantity and a third FD symbol quantity, and a second FD slot quantity and a fourth FD symbol quantity, and the processing module is further configured to:
determine, when the target frame structure comprises the K1 consecutive FD symbols, a first number of complete slots occupied by the K1 FD symbols based on the first FD slot quantity and a number of FD symbols in an incomplete slot occupied by the K1 FD symbols based on the third FD symbol quantity, and determine the FD symbols in the plurality of slots corresponding to the target frame structure based on the first FD slot quantity and the third FD symbol quantity; and
determine, when the target frame structure comprises the K2 consecutive FD symbols, a second number of complete slots occupied by the K2 FD symbols based on the second FD slot quantity and a number of FD symbols in an incomplete slot occupied by the K2 FD symbols based on the fourth FD symbol quantity, and determine the FD symbols in the plurality of slots corresponding to the target frame structure based on the second FD slot quantity and the fourth FD symbol quantity.

42. The apparatus according to claim 39, wherein the receiving module is further configured to receive a UL-DL dedicated configuration message from the BS, wherein the UL-DL dedicated configuration message comprises an FD parameter indicating that one or more F symbols are used as FD.

43. An apparatus for configuring a time division duplex, TDD, frame structure, being applicable to user equipment, UE, that does not support a full duplex, FD, mode, comprising.
a receiving module, configured to receive FD mode enable indication information from a base station, BS, wherein the FD mode enable indication information is transmitted to the UE by the BS in an FD-enabled mode;
an enabling module, configured to ignore the FD mode enable indication information;
wherein each symbol in a slot is expected by the UE to act as a downlink, DL, symbol, an uplink, UL, symbol or a flexible, F, symbol; and
a processing module, configured to process DL data on a time-domain resource related to the DL symbol in the slot acting as the DL symbol, and process UL data on a time-domain resource related to the UL symbol in the slot acting as the UL symbol.

44. An electronic device, comprising:
one or more processors, and
one or more machine-readable storage media, wherein the one or more machine-readable storage media store machine-executable instructions capable of being executed by the one or more processors,
wherein the one or more processors are configured to execute the machine-executable instructions to implement the steps of the method according to any one of claims 1 - 12, or to implement the steps of the method according to any one of claims 13 - 25, or to implement the steps of the method according to claim 26.
